(19) **Europäisches Patentamt European Patent Office Office européen des brevets**

(11) **EP 4 204 774 B1**

(12) ## EUROPEAN PATENT SPECIFICATION

(45) Date of publication and mention of the grant of the patent:
**03.12.2025 Bulletin 2025/49**

(21) Application number: **21859403.4**

(22) Date of filing: **24.08.2021**

(51) International Patent Classification (IPC):
$G01G\ 19/03^{(2006.01)}$ $B25J\ 19/02^{(2006.01)}$

(52) Cooperative Patent Classification (CPC):
**G01G 19/03**

(86) International application number:
**PCT/AU2021/050955**

(87) International publication number:
**WO 2022/040735 (03.03.2022 Gazette 2022/09)**

(54) **MASS ESTIMATING SYSTEMS AND METHODS**

MASSENSCHÄTZUNGSSYSTEME UND -VERFAHREN

SYSTÈMES ET MÉTHODES D'ESTIMATION DE MASSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.08.2020 AU 2020903097**

(43) Date of publication of application:
**05.07.2023 Bulletin 2023/27**

(73) Proprietor: **DMD Electronics Pty Ltd Red Hill, QLD (AU)**

(72) Inventor: **Gale, Stephen William Cremorne, VIC 3121 (AU)**

(74) Representative: **Carrie, Rosemary Louise Hunter et al Kilburn & Strode LLP Lacon London 84 Theobalds Road London WC1X 8NL (GB)**

(56) References cited:
EP-A1- 0 913 342          WO-A1-00/36374
WO-A1-2007/134470    WO-A1-2007/134470
WO-A1-97/04352          US-A- 5 285 860

**Description**

**Cross-Reference to Related Applications**

The present application claims priority from Australian Provisional Patent Application No 2020903097 filed on 28 August 2020.

**Technical Field**

Described embodiments relate generally to mass estimating systems and methods. Some embodiments relate to systems and methods for estimating a mass of an object held by an object holding portion.

**Background**

A desire arises in a number of fields to estimate a mass of an object while moving the object. For example, a mass of a bag may be estimated when being processed at an airport. Furthermore, agricultural goods (such as wood) or industrial goods (such as mined ore) can be stored in stockpiles for later distribution. The mass of a particular quantity of the relevant good, can be measured as the good is moved from the stockpile to another position, for example, for downstream processing where accurate knowledge of the incoming amount of the good is important.

Waste processing is another example where one or more objects are gripped and moved. Waste, for example, municipal solid waste, may be collected and transported by a waste collection system for processing. The waste collection system can be in the form of a waste collection vehicle used to collect waste and transport it to a solid waste treatment facility. The waste collection vehicle includes a hopper, and is configured to grab and lift a waste container to empty the contents of the waste container into the hopper. Some waste collection vehicles can include a mass estimating system that can estimate a mass of the waste container or the contents of the waste container.

Existing mass estimating systems, however, are not able to provide accurate mass estimates while moving the relevant object (e.g. the waste container, bag, agricultural good or mined ore). That is, they require the object to be stationary, or the process of moving the object to be substantially slowed to provide an accurate mass estimate.

WO 00/36374 discloses, according to its abstract, an apparatus for measuring the specific force and angular rotation rate of a moving body having multiple micromachined force-rebalance accelerometers formed in a layer of epitaxial material. Document WO2007/134470 A1 discloses a weighing device for a waste collection vehicle.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each of the appended claims.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

**Summary**

According to a first aspect, there is provided a mass estimating system as defined in claim 1. According to a second aspect, there is provided an object moving mechanism as defined in claim 12. According to a third aspect, there is provided a method for estimating a mass of an object being moved as defined in claim 14.

Some examples relate to a method for estimating a mass of an object being moved. The method may comprise measuring, at a first time that is while the object is being lifted: a force associated with the object, by a force transducer configured such that a force output of the force transducer changes in response to a force exerted on the force transducer; acceleration at a first position relative to the force transducer, by a first accelerometer configured to be disposed at the first position; and acceleration at a second position relative to the force transducer, by a second accelerometer configured to be disposed at the second position. The method may comprise determining a target acceleration indicative of acceleration at a target position that is associated with the object, at the first time, based at least in part on the acceleration at the first position and the acceleration at the second position at the first time, an accelerometer distance and the target position; wherein the accelerometer distance is a distance between the first position and the second position. The method may comprise determining an estimated mass of an object holding portion and the object at the first time based at least in part on the force at the first time and the determined target acceleration at the first time.

In some examples, the method further comprises measuring, at a first plurality of times within a first time window that is while the object is being lifted: the force associated with the object, by the force transducer; acceleration at the first position, by the first accelerometer; and acceleration at the second position, by the second accelerometer.

In some examples, the method further comprises determining a first plurality of target accelerations, each target acceleration of the first plurality being indicative of acceleration at the target position at a respective time of the first plurality of times, wherein each of the first plurality of target accelerations is determined based at least in part on the acceleration at the first position and the acceleration at the second position at the respective time of the first plurality of times, the accelerometer distance and the target position.

In some examples, the method further comprises determining an estimated mass of the object holding portion and the object at each of the first plurality of times, based at least in part on the force at the respective time of the first plurality of times and the determined target acceleration at the respective time of the first plurality of times.

In some examples, the method further comprises determining a first mean, the first mean being a mean of the estimated masses of the object holding portion and the object at each of the first plurality of times and the estimated mass of the object holding portion and the object at the first time.

In some examples, the method further comprises measuring, at a second time that is while the object is being lowered: the force associated with the object, by the force transducer; acceleration at the first position, by the first accelerometer; and acceleration at the second position, by the second accelerometer.

In some examples, the method further comprises determining a target acceleration indicative of acceleration at the target position at the second time, based at least in part on the acceleration at the first position and the acceleration at the second position at the second time, the accelerometer distance and the target position.

In some examples, the method further comprises determining an estimated mass of the object holding portion and the object at the second time based at least in part on the force at the second time and the determined target acceleration at the second time.

In some examples, the method further comprises measuring, at a second plurality of times within a second time window that is while the object is being lowered: the force associated with the object, by the force transducer, acceleration at the first position, by the first accelerometer; and acceleration at the second position, by the second accelerometer.

In some examples, the method further comprises determining a second plurality of target accelerations, each target acceleration of the second plurality being indicative of acceleration at the target position at a respective time of the second plurality of times, wherein each of the second plurality of target accelerations is determined based at least in part on the acceleration at the first position and the acceleration at the second position at the respective time of the second plurality of times, the accelerometer distance and the target position.

In some examples, the method further comprises determining an estimated mass of the object holding portion and the object at each of the second plurality of times, based at least in part on the force at the respective time of the second plurality of times and the determined target acceleration at the respective time of the second plurality of times.

In some examples, the method further comprises determining a second mean, the second mean being a mean of the estimated masses of the object holding portion and the object at each of the second plurality of times and the estimated mass of the object holding portion and the object at the second time.

In some examples, the second time and the second time window are after the first time and the first time window.

In some examples, the method further comprises determining a difference between the estimated mass of the object holding portion and the object at the first time and the estimated mass of the object holding portion and the object at the second time, wherein the difference is indicative of a mass of a load of the object.

In some examples, the method further comprises determining a difference between the first mean and the second mean, wherein the difference is indicative of a mass of a load of the object.

In some examples, the first time corresponds to a time where the object holding portion and the object are at a start position.

In some examples, the method further comprises controlling the connecting system to lift the object holding portion and the object to a load discharge position.

In some examples, the first time window corresponds to a time window during which the object holding portion and the object are lifted from a start position to a load discharge position.

In some examples, the method further comprises controlling the connecting system to lower the object holding portion and the object to a start position.

In some examples, the second time corresponds to a time where the object holding portion and the object are at the load discharge position.

In some examples, the second time window corresponds to a time during which the object holding portion and the object are lowered from the load discharge position to the start position.

In some examples, the target acceleration is determined based at least in part on a target position distance corresponding to a distance between the target position and the second position.

In some examples, the target position is an estimated centre of mass of the object and the object holding portion.

In some examples, the method further comprises comparing the estimated mass at the first time to a mass threshold.

In some examples, the method further comprises providing an output where the estimated mass is greater than the mass threshold.

In some examples, the output comprises a visual output, an audible output and/or a control signal configured to control the connecting system and/or the object holding portion.

In some examples, the method further comprises: receiving object identification information; and determining the target position based at least in part on the object identification information.

In some examples, measuring the force comprises: converting, by an analogue to digital (ADC) converter, the force output of the force transducer to an ADC output, wherein the ADC output is a digital output.

In some examples, determining the estimated mass of the object holding portion and the object based at least in part on the force comprises determining the estimated mass of the object holding portion and the object based at least in part on the ADC output.

In some examples, the acceleration at the first position at the first time is $a_1$, the acceleration at the second position at the first time is $a_2$, the accelerometer distance is $l_1$, a distance between the target position and the second position is $l_2$, the target acceleration at the first time is $a_x$, and determining the target acceleration at the first time comprises solving for the target acceleration $a_x$ in:

$$a_x = \frac{a_2(l_1+l_2)-a_1 l_2}{l_1}.$$

Some examples relate to a mass estimating system. The mass estimating system may comprise a force transducer configured such that a force output of the force transducer changes in response to a force exerted on the force transducer; wherein the force transducer is configured to couple to an object holding portion, and the force output is indicative of a mass of the object holding portion and an object held by the object holding portion; a first accelerometer configured to be disposed at a first position relative to the force transducer, and to provide a first acceleration output indicative of acceleration at the first position; and a second accelerometer configured to be disposed at a second position relative to the force transducer, and to provide a second acceleration output indicative of acceleration at the second position.

In some examples, the force transducer, the first accelerometer and the second accelerometer are each configured to be moved parallel to a plane of motion of the object holding portion with movement of the object holding portion.

In some examples, the mass estimating system further comprises: at least one processor; and a memory storing program instructions accessible by the at least one processor, and configured to cause the at least one processor to: determine a target acceleration indicative of acceleration at a target position that is associated with the object, at a first time, based at least in part on the first acceleration output at the first time, the second acceleration output at the first time, an accelerometer distance and the target position; wherein the accelerometer distance is a distance between the first position and the second position.

In some examples, the program instructions are further configured to cause the at least one processor to determine an estimated mass of the object holding portion and the object at the first time based at least in part on the force output at the first time and the determined target acceleration at the first time.

In some examples, the program instructions are further configured to cause the at least one processor to: determine a first plurality of target accelerations, each target acceleration of the first plurality being indicative of acceleration at the target position at a respective time of a first plurality of times within a first time window, wherein each of the first plurality of target accelerations is determined based at least in part on the first acceleration output and the second acceleration output at the respective time, the accelerometer distance and the target position.

In some examples, the program instructions are further configured to cause the at least one processor to determine an estimated mass of the object holding portion and the object at each respective time of the first plurality of times, based at least in part on the force output at the respective time of the second plurality of times and the determined target acceleration at the respective time of the second plurality of times.

In some examples, the program instructions are further configured to cause the at least one processor to determine a first mean, the first mean being a mean of the estimated masses of the object holding portion and the object at each of the first plurality of times and the estimated mass of the object holding portion and the object at the first time.

In some examples, the program instructions are further configured to cause the at least one processor to: determine a target acceleration indicative of acceleration at the target position at a second time, based at least in part on the first acceleration output at the second time, the second acceleration output at the second time, the accelerometer distance and the target position.

In some examples, the program instructions are further configured to cause the at least one processor to determine an estimated mass of the object holding portion and the object at the second time based at least in part on the force output at the second time and the determined target acceleration at the second time.

In some examples, the program instructions are further configured to cause the at least one processor to:

determine a second plurality of target accelerations, each target acceleration of the second plurality being indicative of acceleration at the target position at a respective time of a second plurality of times within a second time window, wherein each of the second plurality of target accelerations is determined based at least in part on the first acceleration output and the second acceleration output at the respective time of the second plurality of times, the accelerometer distance and the target position.

In some examples, the program instructions are further configured to cause the at least one processor to determine an estimated mass of the object holding portion and the object at each respective time of the second plurality of times, based at least in part on the force output at the respective time of the second plurality of times and the determined target acceleration at the respective time of the second plurality of times.

In some examples, the program instructions are further configured to cause the at least one processor to determine a second mean, the second mean being a mean of the estimated masses of the object holding portion and the object at each of the second plurality of times and the estimated mass of the object at the second time.

In some examples, the program instructions are further configured to cause the at least one processor to determine a difference between the estimated mass of the object holding portion and the object at the first time and the estimated mass of the object holding portion and the object at the second time.

In some examples, the program instructions are further configured to cause the at least one processor to determine a difference between the first mean and the second mean.

In some examples, the second time is after the first time.

In some examples, the target acceleration is determined based at least in part on a target position distance corresponding to a distance between the target position and the second position.

In some examples, the second time window is after the first time window.

In some examples, the force transducer defines a fixed side and an active side; and the active side is configured to couple to the object holding portion.

In some examples, the first position is near the fixed side and the second position is near the active side.

In some examples, the first position, the second position and the target position are coplanar.

Some examples relate to an object moving mechanism. The object moving mechanism may comprise: the mass estimating system disclosed above; the object holding portion; and a connecting system configured to: couple to the force transducer at one end and a vehicle at another end; and move the force transducer and the object holding portion.

In some examples, the object moving mechanism further comprises an object moving mechanism controller configured to: control the object holding portion to grab the object; and control the connecting system to lift the object holding portion and the object to a start position.

In some examples, the first time corresponds to a time where the object holding portion and the object are at the start position.

In some examples, the object moving mechanism controller is further configured to control the connecting system to lift the object holding portion and the object to a load discharge position.

In some examples, the first time window corresponds to a time during which the object holding portion and the object are lifted from the start position to the load discharge position.

In some examples, the second time corresponds to a time where the object holding portion and the object are at the load discharge position.

In some examples, the object moving mechanism controller is further configured to control the connecting system to lower the object holding portion and the object to the start position.

In some examples, the second time window corresponds to a time during which the object holding portion and the object are lowered from the load discharge position to the start position.

In some examples, the target position is an estimated centre of mass of the object holding portion and the object.

In some examples, the program instructions are further configured to cause the at least one processor to compare the estimated mass of the object holding portion and the object at the first time to a mass threshold, and to provide an output where the estimated mass of the object holding portion and the object at the first time is greater than the mass threshold.

In some examples, the program instructions are further configured to cause the at least one processor to compare the first mean to a mass threshold, and provide an output where the first mean is greater than the mass threshold.

In some examples, the output comprises a visual output, an audible output and/or a control signal configured to control an actuator.

In some examples, the mass estimating system further comprises a reader module configured to read object identification information.

In some examples, the program instructions are further configured to cause the processor to determine the target position based at least in part on the object identification information.

In some examples, the force transducer is a parallel bending beam load cell or a shear beam load cell.

In some examples, the connecting system comprises a clamp configured to clamp hoses and/or cables that extend from the object holding portion, thereby securing the hoses and/or cables to the connecting system.

In some examples, the mass estimating system further comprises a power source configured to provide electricity to the force transducer, the first accelerometer and the second accelerometer.

In some examples, the mass estimating system comprises a first wireless transceiver.

In some examples, the object moving mechanism comprises a second wireless transceiver.

In some examples, the first wireless transceiver is configured to transmit a wireless signal comprising the estimated mass of the object holding portion and the object.

In some examples, the second wireless transceiver is configured to receive the wireless signal.

In some examples, the connecting system comprises a wireless energy transmission coil.

In some examples, the object holding portion comprises a wireless energy receiving coil.

In some examples, the wireless energy transmission coil is configured to wirelessly transmit energy to the wireless energy receiving coil.

In some examples, the wireless energy receiving coil is configured to charge the power source.

In some examples, wherein the mass estimating system further comprises an analogue to digital (ADC) converter configured to convert the force output into an ADC output.

In some examples, the ADC output is a digital output.

In some examples, determining the estimated mass of the object holding portion and the object based at least in part on the force output comprises determining the estimated mass of the object holding portion and the object based at least in part on the ADC output.

Some examples relate to a non-transitory computer readable storage medium comprising instructions which when executed by one or more processors cause the one or more processors to perform the method disclosed above.

**Brief Description of Drawings**

Examples of the present disclosure will now be described by way of non-limiting example only with reference to the accompanying drawings, in which:

Figure 1 illustrates an object moving system in the form of a waste collection vehicle, according to some embodiments;

Figure 2 illustrates a side view of an object moving mechanism and a mass estimating system of the object moving system, according to some embodiments;

Figure 3 illustrates a top view of the object moving mechanism and the mass estimating system of Figure 2, according to some embodiments;

Figure 4 is a block diagram of an object moving system according to some embodiments;

Figure 5 is a block diagram of another embodiment of an object moving system, according to some embodiments;

Figure 6 is a process flow diagram of a method for estimating a mass of an object being lifted, according to some embodiments;

Figure 7 is a derivation of a target acceleration equation, according to some embodiments; and

Figure 8 is a process flow diagram of an implementation of the method of Figure 6, according to some embodiments.

**Description of Embodiments**

Described embodiments relate to object moving systems for holding and transporting one or more objects. Some described embodiments relate to object moving systems configured to move agricultural objects such as wood. Some described embodiments relate to object moving systems configured to move industrial products such as mined ore. Some described embodiments relate to object moving systems configured to move manufactured products such as bags or mail. Some described embodiments relate to object moving systems in the form of waste collection systems for collecting and transporting waste for processing. For example, a waste collection vehicle, which is one form of a waste collection system, may collect waste for processing at a waste processing facility or for disposal at a disposal facility. The waste collection vehicle may be configured to grip and lift an object such as a waste container to empty the contents of the object, such as waste, into a hopper. The waste collection vehicle may transport the collected waste to the waste processing facility for processing or to a disposal facility for disposal.

Waste processing facilities and waste disposal facilities themselves may also comprise one or more waste collection systems. For example, waste collected and transported to the waste collecting facility by a waste collection vehicle may be stored in a stockpile. A waste collection system of the waste processing facility may collect and transport some or all of the stockpiled waste to other areas of the facility for processing.

Some object moving systems, such as some waste collection systems, can include a mass estimating system that can estimate a mass of an object (e.g. a waste container or a load held by the waste container) moved by the waste collection system. For example, the mass estimating system may determine an estimate of the mass of the waste container at a point during the process of collecting the waste.

Existing mass estimating systems, however, are not able to provide accurate mass estimates while the object moving system is moving the object (e.g. when lifting the waste container). That is, they require the object to be stationary, or the process of moving the object to be substantially slowed to provide an accurate mass estimate. They are also only able to determine mass estimates under certain conditions. For example, the waste collection systems may require certain components to be in particular orientations, such as horizontal, to be able to determine a mass estimate.

These limitations significantly reduce the productivity of the object moving systems, as the frequent pausing or slowing of the object (and therefore, waste collection, for example) reduces the amount of objects that can be moved in a given time window. For example, in the case of the waste processing vehicle, the requirement to stop a lifting process involved in collecting the waste, or to significantly slow it, reduces the number of waste containers that can be emptied in a given time window. The frequent pausing or slowing of waste collection may also increase mechanical wear on the relevant components of the object moving system.

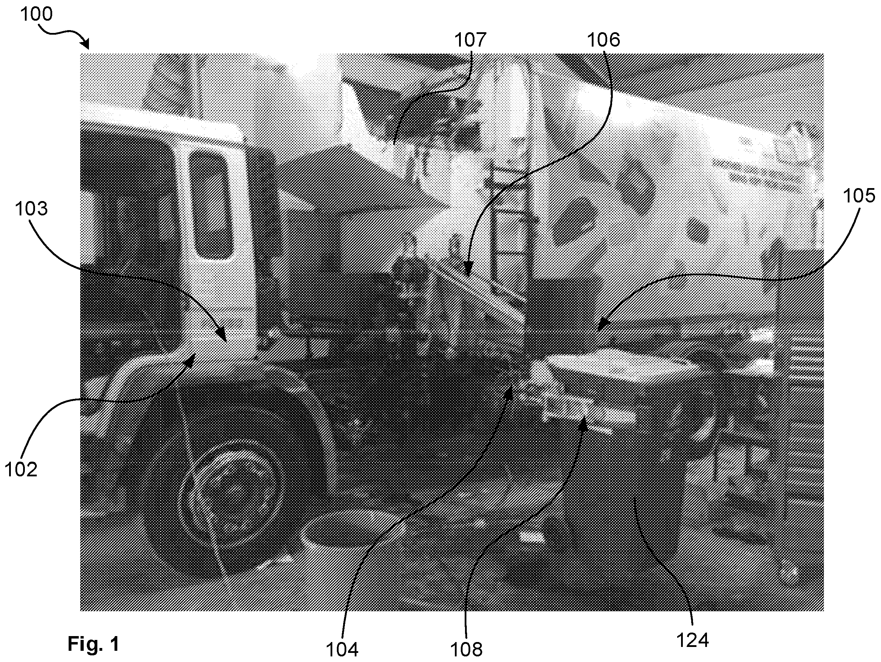

Figures 1 to 4 illustrate an object moving system 100, according to some embodiments. The object moving system 100 is configured to move an object 124. The object moving system 100 may be in the form of a waste collection system 100. The object moving system 100 is illustrated in the form of a waste collection vehicle 102. The object moving system 100 comprises a body 103. The object moving system 100 comprises an object moving mechanism 104. The illustrated object moving mechanism 104 is in the form of a waste retrieval system 104. The object moving mechanism 104 is supported by the body 103. The object moving system 100 comprises a mass estimating system 105. The object moving system 100 comprises a hopper 107.

Object moving mechanism 104

The object moving mechanism 104 comprises a connecting system 106 and an object holding portion 108. The connecting system 106 is configured to be coupled to the object moving system 100 at one end and is configured to be coupled to the object holding portion 108 at another end. The connecting system 106 is movably coupled to the object moving system 100, such that the connecting system 106 can be moved with respect to the object moving system 100.

The connecting system 106 comprises a linear member 110 and a rotatable member 112. The linear member 110 is configured to be coupled to the object moving system 100. In particular, the linear member 110 is configured to be coupled to the object moving system 100 at one end (e.g. an end of the linear member 110 that is proximal to the object moving system 100). The linear member 110 is configured to be movable with respect to the object moving system 100. In particular, the linear member 110 is configured to be movable parallel to a connecting system linear axis 113. That is, the linear member 100 is configured to be moved linearly with respect to the object moving system 100.

The connecting system 106 comprises a linear member actuator (not shown) that is coupled to the object moving system 100 and the linear member 110. The linear member actuator is controllable to move the linear member 110 parallel to the connecting system linear axis 113. That is, the linear member actuator is controllable to move the linear member 110 in an outwards direction 115 and in an inwards direction 117. When the linear member 110 is moved in the outwards direction 115, the object holding portion 108 is moved away from the object moving system 100. When the linear member 110 is moved in the inwards direction 117, the object holding portion 108 is moved towards the object moving system 100. In some embodiments, the linear member actuator is a linear actuator.

The rotatable member 112 is configured to rotate with respect to the linear member 110. The rotatable member 112 is coupled to the linear member 110 at a member coupling 114. The member coupling 114 is disposed at a distal end of the linear member 110 and a proximal end of the rotatable member 112. The member coupling 114 defines a rotatable member axis 116. The rotatable member 112 is configured to rotate with respect to the linear member 110 about the rotatable member axis 116. The rotatable member axis 116 may be defined by a member coupling pivot (not shown).

The connecting system 106 comprises a rotatable member actuator (not shown). The rotatable member actuator may be coupled to the linear member 110 and the rotatable member 112. Alternatively, the rotatable member actuator may be coupled to the object moving system 100 and the rotatable member 112. The rotatable member actuator is controllable to rotate the rotatable member 112 with respect to the linear member 110. That is, the rotatable member actuator is controllable to rotate the rotatable member 112 in a first direction 120 and in a second direction 122. The first direction 120 may be opposite to the second direction 122. Rotating the rotatable member 112 in the first direction 120 lifts a distal end of the rotatable member 112. Rotating the rotatable member 112 in the first direction 120 also lifts the object holding portion 108. Rotating the rotatable member 122 in the second direction 122 lowers the distal end of the rotatable member 112. Rotating the rotatable member 122 in the second direction 122 also lowers the object holding portion 108. Rotating the rotatable member 122 therefore causes the object holding portion 108 to move within a plane of motion.

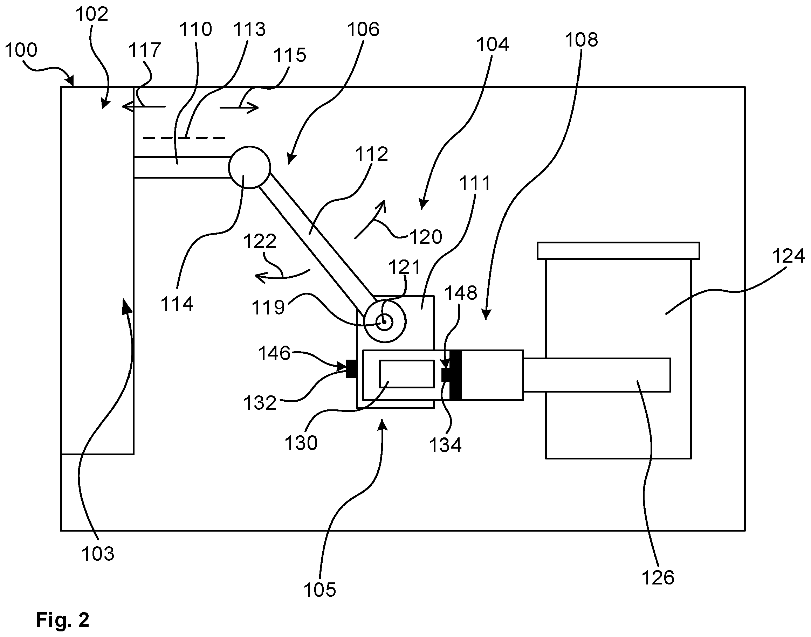

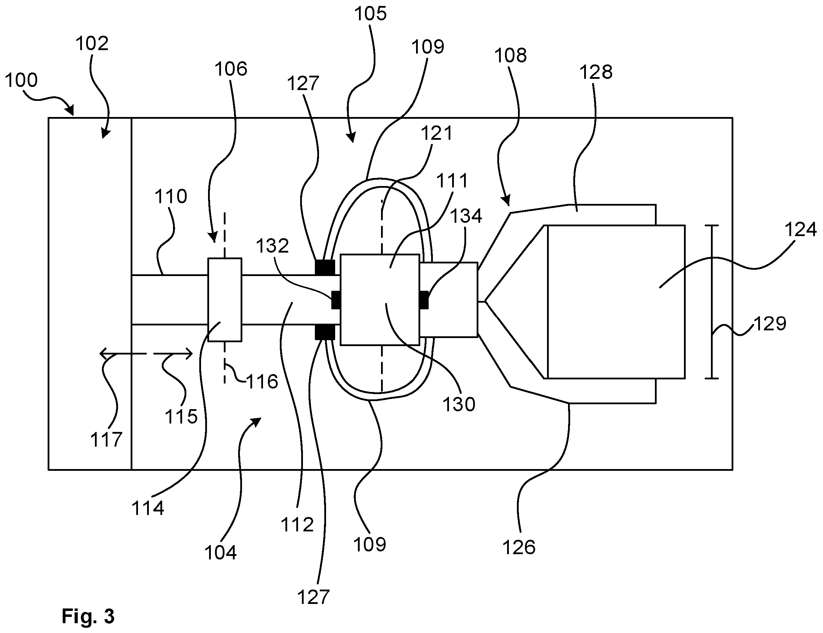

The rotatable member 112 is configured to be coupled to the object holding portion 108. The rotatable member 112 may be configured to be coupled to the object holding portion 108 via one or more intermediary components. For example, as illustrated in Figure 2 and Figure 3, the connecting system 106 comprises an intermediate portion 111. The intermediate portion 111 is configured to rotate with respect to the rotatable member 112. The intermediate portion 111 is coupled to the rotatable member 112 at an intermediate portion coupling 119. The intermediate portion coupling 119 is disposed at a distal end of the rotatable member 112. The intermediate portion coupling 119 defines an intermediate portion coupling axis 121. The intermediate portion 111 is configured to rotate with respect to the rotatable member 112 about the intermediate portion coupling axis 121. The intermediate portion coupling axis 121 may be defined by an intermediate portion coupling pivot (not shown).

The connecting system 106 comprises an intermediate portion actuator (not shown). The intermediate portion actuator may be coupled to the rotatable member 112 and the intermediate portion 111. The intermediate portion actuator is controllable to rotate the intermediate portion 111 with respect to the rotatable portion 112. Specifically, the intermediate portion actuator is controllable to bi-directionally rotate the intermediate portion 111 about the intermediate portion coupling axis 121.

The intermediate portion 111 is configured to couple to the object holding portion 108. The intermediate portion 111 may be configured to be coupled to the object holding portion 108 via one or more additional intermediate components, as is described in more detail below.

The object holding portion 108 is configured to hold the object 124. The object holding portion 108 illustrated in Figures 1 to 3 is configured to grip the object 124. The object holding portion 108 comprises a pair of opposed grip members configured to releasably grip the object 124. The object holding portion 108 may therefore be said to grab the object 124.

The object holding portion 108 comprises a first grip member 126 and a second grip member 128. The first grip member 126 and the second grip member 128 are configured to grip opposing sides of the object 124. The first grip member 126 is moveable with respect to the second grip member 128. The second grip member 128 is moveable with respect to the first grip member 126. The first grip member 126 and the second grip member 128 are moveable to change a grip distance 129 between the first grip member 126 and the second grip member 128. Moving the first grip member 126 and the second grip member 128 to reduce the grip distance 129 causes the first grip member 126 and the second grip member 128 to grip the object 124. When the object 124 is gripped by the object holding portion 108, moving the first grip member 126 and the second grip member 128 to increase the grip distance 129 causes the object holding portion 108 to release the object 124.

The connecting system 106 comprises one or more object holding portion actuators (not shown). The one or more object holding portion actuators are configured to control the object holding portion 108 to grip and release the object 124. For example, a first object holding portion actuator may control movement of the first grip member 126 and a second object holding portion actuator may control movement of the second grip member 128. Thus, the first grip member 126 and the second grip member 128 may be independently controllable. Alternatively, one object holding portion actuator may control movement of both the first grip member 126 and the second grip member 128.

In some embodiments, hoses and/or cables 109 may extend between the object holding portion 108 and the body 103. These hoses and/or cables 109 may be used to control the object holding portion 108, for example. The hoses and/or cables 109 may comprise one or more hydraulic hoses. The hoses and/or cables 109 may comprise one or more electrical wires.

As shown in Figure 3, the object moving mechanism 104 comprises a clamp 127. In particular, the connecting system 106 comprises the clamp 127, which may be coupled to the rotatable member 112 or the linear member 110. The clamp 127 is configured to clamp the hoses and/or cables 109 to the connecting system 106. The clamp 127 clamps the hoses and/or cables 109 to the connecting system 106 such that there is no, or little relative movement between a portion of the hoses and/or cables 109 clamped by the clamp 127, and the position at which the clamp 127 is coupled to the connecting system 106.

In some embodiments, the object moving system 100 comprises an object moving mechanism controller 123. The object moving mechanism controller 123 is configured to control the object moving mechanism 104. For example, the object moving mechanism controller 123 is configured to control one or more of the connection system 106 and the object holding system 108. To do so, the object moving mechanism controller 123 is configured to control one or more of the linear member actuator, the rotatable member actuator, the intermediate portion actuator and the object holding portion actuator(s).

The object 124 is configured to receive and hold a load. In some embodiments, the object 124 is a waste container. The waste container may define a space configured to receive waste. The load may therefore be waste that is received in the space. In some embodiments however, the object 124 may be in the form of an agricultural good, manufactured product, mined ore etc. as previously described.

Mass estimating system 105

Referring again to Figures 1 to 3, and Figure 4, the object moving system 100 comprises a mass estimating system 105. The mass estimating system 105 comprises a force transducer 130. The force transducer 130 is configured such that a force output of the force transducer changes in response to a force exerted on the force transducer 130. In some embodiments, the force transducer 130 may be referred to as a load cell. The mass estimating system 105 comprises a first accelerometer 132. The first accelerometer 132 is configured to provide a first acceleration output. The mass estimating system 105 comprises a second accelerometer 134. The second accelerometer 134 is configured to provide a second acceleration output. The mass estimating system 105 comprises at least one processor 140. The mass estimating system 105 comprises a memory 142. The memory 142 stores program instructions 144 accessibly by the at least one processor 140. The program instructions 144 are configured to cause the at least one processor 140 to perform certain functionality, as is described in more detail below.

The force transducer 130 is configured to couple to the object holding portion 108. The force transducer 130 is also configured to couple to the rotatable member 112. In some embodiments, the force transducer 130 is configured to couple directly to the rotatable member 112. In some embodiments, the force transducer 130 is configured to be indirectly coupled to the rotatable member 112. For example, as illustrated in Figure 2 and Figure 3, the force transducer 130 may be configured to couple to the rotatable member 112 via the intermediate portion 111.

The force transducer 130 defines a fixed side 136 and an active side 138. The fixed side 136 of the force transducer 130 is configured to couple to the intermediate portion 111 or the rotatable portion 112. The active side 138 of the force transducer 130 is configured to couple to the object holding portion 108. The force transducer 130 is configured to support the object holding portion 108 and the object 124 (when the object 124 is held by the object holding portion 108).

The force transducer 130 is configured such that the force output changes in response to a force exerted on the active side 138. The force output of the force transducer 130 is indicative of a force exerted on the force transducer 130 by the object holding portion 108 and the object 124 (when the object 124 is held by the object holding portion 108). In some embodiments, the force output is a voltage across the force transducer 130.

The force exerted on the force transducer 130 by the object holding portion 108 and the object 124 (when the object 124 is held by the object holding portion 108) may be a weight of the object holding portion 108 and the object 124. The force exerted on the force transducer 130 by the object holding portion 108 and the object 124 may be a result of acceleration of the object holding portion 108 and the object 124.

In some embodiments, the force transducer 130 is an analogue force transducer. In these embodiments, the force output is an analogue output. The mass estimating system 105 comprises an analogue to digital converter (ADC) 131. The ADC 131 may use the force output as an input to provide an ADC output. That is, the ADC 131 may be configured to convert the analogue force output to a digital force output, with the digital force output being the ADC output. The ADC output is therefore based at least in part on the force output. For example, the ADC 131 may sample the force output at a sampling frequency, and convert the analogue force output to a digital force output based on the sampling. In some embodiments, the force transducer 130 is a digital force transducer. In these embodiments, the force output is a digital output. In some embodiments, the force transducer 130 is a in the form of a parallel bending beam load cell. In some embodiments, the force transducer 130 is in the form of a shear beam load cell.

The first accelerometer 132 is configured to be disposed at a first position 146 relative to the force transducer 130. The first accelerometer 132 is configured such that the first acceleration output is indicative of acceleration at the first position 146. When disposed at the first position 146, the first accelerometer 132 is rigidly coupled to the force transducer 130. Thus, movement of the force transducer 130 causes corresponding movement of the first accelerometer 142.

The first position 146 is near the fixed side 136 of the force transducer 130. In some embodiments, the first accelerometer 132 is configured to be coupled directly to the force transducer 130. For example, the first accelerometer 132 may be coupled directly to the fixed side 136 of the force transducer 130. The first position 146 of these embodiments is therefore at or near the fixed side 136 of the force transducer 130. In some embodiments, the first accelerometer 132 is configured to be coupled to the intermediate portion 111. For example, the first accelerometer 132 may be coupled to the intermediate portion 111 near the fixed side 136 of the force transducer 130. The first position 146 of these embodiments is therefore at or near the fixed side of the force transducer 130 and at or near the intermediate portion 111. In some embodiments, the first accelerometer 132 is configured to be coupled to the rotatable member 112. For example, the first accelerometer 132 may be coupled to the rotatable portion 112 near the fixed side 136 of the force transducer 130. The first position 146 of these embodiments is therefore at or near the fixed side 136 of the force transducer 130 and at or near the rotatable portion 112.

The second accelerometer 134 is configured to be disposed at a second position 148 relative to the force transducer 130. The second accelerometer 134 is configured such that second acceleration output is indicative of acceleration at the second position 148. When disposed at the second position 148, the second accelerometer 134 is rigidly coupled to the force transducer 130. Thus, movement of the force transducer 130 causes corresponding movement of the second accelerometer 134.

The second position 148 is near the active side 138 of the force transducer 130. In some embodiments, the second accelerometer 134 is configured to be coupled directly to the force transducer 130. For example, the second accelerometer 134 may be coupled directly to the active side 138 of the force transducer 130. The second position 148 of these embodiments is therefore at or near the active side 138 of the force transducer 130. In some embodiments, the second accelerometer 134 is configured to be coupled to the object holding portion 108. For example, the second accelerometer 134 may be coupled to the object holding portion 108 near the active side 138 of the force transducer 130. The second position 148 of these embodiments is therefore at or near the active side 138 of the force transducer 130 and at or near the object holding portion 108.

The first accelerometer 134, and the second accelerometer 136 are each configured to be moved parallel to the plane of motion of the object holding portion 108 with movement of the object holding portion 108.

The mass estimating system 105 may comprise a reader module 158. The reader module 158 is configured to read object identification information. The mass estimating system 105 may also comprise an object identification tag 160. The object identification tag 160 is configured to store the object identification information. The reader module 158 is configured to read the object identification information when brought within a reading distance of the object identification tag.

In some embodiments, the reader module 158 is a Near-Field-Communication (NFC) reader module. In these embodiments, the object identification tag 160 may be a NFC tag. In some embodiments, the reader module 158 may be in the form of a camera. In these embodiments, the object identification tag 160 may be a QR code, barcode or other machine-readable indicia. The object identification information may comprise information relating to the object 124. For example, where the object 124 is a waste container, the object identification information may comprise information indicative of a unique identification number, model, height, width, depth, volume, estimated empty mass, estimated full mass, centre of mass, location (e.g. an expected physical location such as an address, or an expected location in the form of Global Positioning System (GPS) coordinates) and/or details regarding the owner or user of the object 124.

As previously described, the at least one processor 140 is configured to execute program instructions 144 stored in memory 142 to cause the at least one processor 140 to perform certain functionality. In some embodiments, the program instructions 144 are in the form of instruction program code. The at least one processor 140 may comprise one or more digital signal processors (DSPs), microprocessors, central processing units (CPUs), application specific instruction set processors (ASIPs), application specific integrated circuits (ASICs) or other processors capable of reading and executing instruction code.

Memory 142 may comprise one or more volatile or non-volatile memory types. For example, memory 142 may comprise one or more of random access memory (RAM), read-only memory (ROM), electrically erasable programmable read-only memory (EEPROM) or flash memory. Memory 142 is configured to store program code accessible by the at least one processor 140. The program code 144 comprises executable program code modules. In other words, memory 142 is configured to store executable code modules configured to be executable by the at least one processor 140. The executable code modules, when executed by the at least one processor 140 cause the at least one processor 140 to perform certain functionality, as described in more detail below.

The at least one processor 140 is configured to be in communication with the force transducer 130. The at least one processor 140 is configured to receive the force output from the force transducer 130. The at least one processor 140 may receive the force output if, for example, the force transducer 130 is a digital force transducer. In some embodiments, the at least one processor 140 is configured to be in communication with the ADC 131. In these embodiments, the at least one processor 140 is configured to receive the ADC output from the ADC 131. The at least one processor 140 may receive the ADC output if, for example, the force transducer 130 is an analogue force transducer. The at least one processor 140 is configured to be in communication with the reader module 158. The at least one processor 140 is configured to receive object identification information read by the reader module 158. The at least one processor 140 may store the object identification information in memory 142.

The at least one processor 140 is configured to be in communication with the first accelerometer 132. The at least one processor 140 is configured to receive the first acceleration output from the first accelerometer 132. The at least one processor 140 is configured to store the first acceleration output in memory 142. The at least one processor 140 is configured to be in communication with the second accelerometer 134. The at least one processor 140 is configured to receive the second acceleration output from the second accelerometer 134. The at least one processor 140 is configured to store the second acceleration output in memory 142.

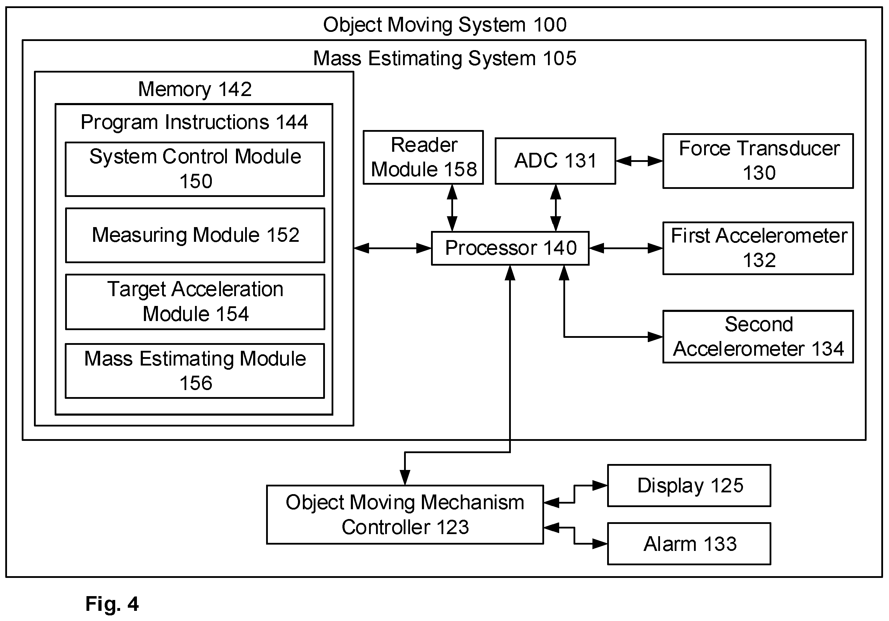

The at least one processor 140 may be configured to communicate with the object moving mechanism controller 123. That is, the at least one processor 140 may be configured to transmit processor output signals to the object moving mechanism controller 123. The at least one processor 140 may also be configured to receive object moving mechanism output signals from the object moving mechanism controller 123. Furthermore, the object moving mechanism controller 123 may be configured to receive the processor output signals from the at least one processor 140. The object moving mechanism controller 123 may also be configured to transmit object moving mechanism output signals to the at least one processor 140. In the embodiment of Figure 4, the at least one processor 140 and the object moving mechanism controller 123 communicate via a wired communication channel.

The at least one processor 140 may also be configured to communicate with other computing devices. As illustrated in Figure 4, the at least one processor 140 is configured to communicate with a display 125. The at least one processor 140 may be configured to display information on the display 125. For example, the at least one processor 140 may be configured to display mass estimates determined as described herein on the display 125. In some embodiments, at least one processor 140 is in communication with the object moving system controller 123, which in turn controls the display 125.

In some embodiments, the object moving system 100 comprises an alarm 133. The alarm 133 may comprise a visual alarm, such as a light. The alarm 133 may comprise an audible alarm delivered, for example, by a speaker. The at least one processor 140 is configured to communicate with the alarm 133. The at least one processor 140 may be configured to activate the alarm 133. For example, the at least one processor 140 may be configured to provide an audible output via the alarm 133. The at least one processor 140 may be configured to provide a visual output via the alarm 133. In some embodiments, at least one processor 140 is in communication with the object moving mechanism controller 123, which in turn controls the alarm 133.

As shown in Figure 4, memory 142 comprises a system control module 150 configured to control the object moving mechanism 104, as is described in more detail below. The system control module 150 may control the object moving mechanism 104 by transmitting output signals to the object moving mechanism controller 123. The object moving mechanism controller 123 may then control the object moving mechanism 104 to execute the desired functionality. In some embodiments, the system control module 150 is also configured to control other components of the object moving system 100, as is described herein.

Memory 142 further comprises a target acceleration module 152. The target acceleration module 152 is configured to determine a target acceleration, as is described in more detail below.

Memory 142 further comprises a mass estimating module 154. The mass estimating module 154 is configured to determine an estimated mass of the object 124, as is described in more detail below.

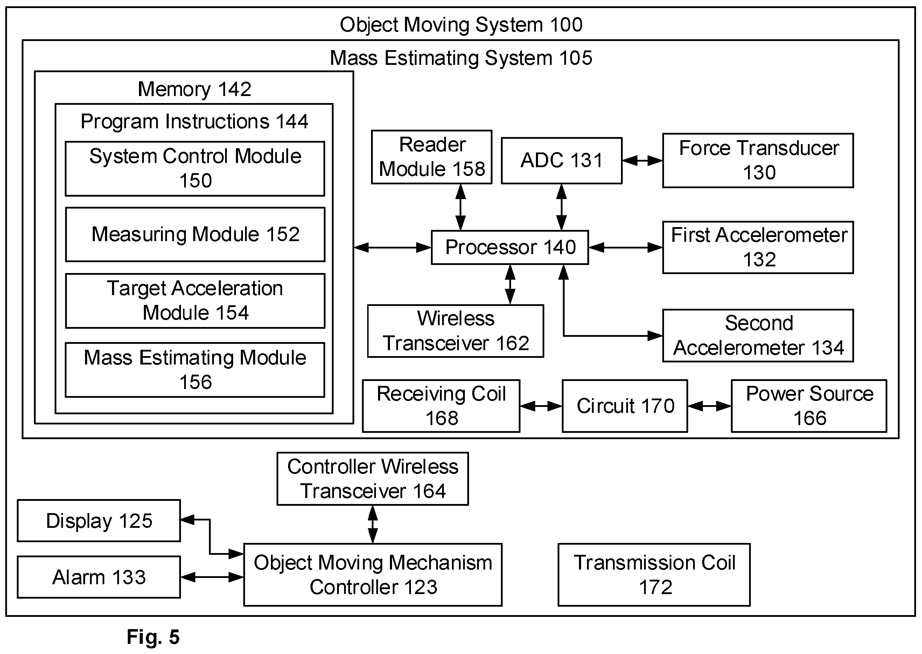

Referring now to Figure 5, an alternative embodiment of the mass estimating system 105, according to some embodiments, is shown. The mass estimating system 105 of Figure 5 comprises a wireless transceiver 162. The mass estimating system 105 is configured to transmit information via the wireless transceiver 162. In some embodiments, the at least one processor 140 is configured to communicate with the object moving mechanism controller 123 via the wireless transceiver 162. The at least one processor 140 may be configured to communicate using wireless transceiver 162 using the BlueTooth protocol. The object moving mechanism controller 123 comprises a controller wireless transceiver 164. The controller wireless transceiver 164 facilitates wireless communication between the object moving mechanism controller 123 and the at least one processor 140. The object moving mechanism controller 123 may be configured to communicate using the controller wireless transceiver 164 using the BlueTooth protocol. In some embodiments, the at least one processor 140 is configured to transmit a wireless signal comprising an estimated mass of the object 124 or the object 124 and the object holding portion 108 via the wireless transceiver 162. The object moving mechanism controller 123 is configured to receive the wireless signal via the controller wireless transceiver 164.

The mass estimating system 105 also comprises a power source 166. The power source 166 may be in the form of a rechargeable battery. The power source 166 may be in the form of a capacitor. The power source 166 is configured to power the mass estimating system 105. That is, the power source 166 is configured to provide electricity to the force transducer 130, the first accelerometer 132 and the second accelerometer 134. This advantageously reduces the amount of electrical connections between the mass estimating system 105 and the object moving system 100.

The mass estimating system 105 comprises a wireless energy receiving coil 168. The mass estimating system 105 also comprises a wireless power circuit 170. The wireless power circuit 170 is configured to couple the wireless energy receiving coil 168 to the power source 166. The object moving system 100 comprises a wireless energy transmission coil 172. The wireless energy transmission coil 172 is configured to wirelessly transmit power to the wireless energy receiving coil 168 when the object moving mechanism 104 is in a lowered position. When the object moving mechanism 104 is in the lowered position, the wireless energy transmission coil 172 may be within a transfer distance of the wireless energy receiving coil 168, enabling the transfer of power wirelessly between the coils. The wireless energy receiving coil 168 is configured to charge the power source 166. The mass estimating system 105 also comprises a power supply configured to convert power supplied by the power source 166 to a form that can be used to power the mass estimating system 105. For example, the power supply may comprise a voltage regulator configured to regulate the voltage supplied by the power source 166. The power supply may comprise a current regulator configured to regulate the current supplied by the power source 166.

Method for estimating a mass of the object 124

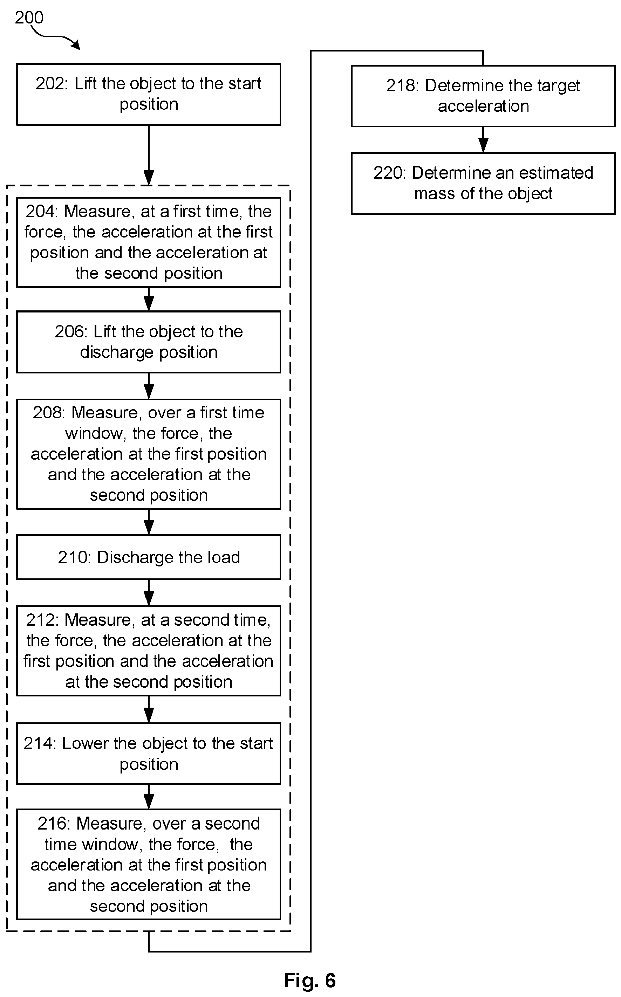

Referring now to Figure 6, there is shown a process flow diagram of a method 200 for estimating the mass of the object 124, according to some embodiments. In particular, the method 200 may be for estimating the mass of the object 124 being moved or lifted.

At 202, the object moving mechanism 104 moves the object 124 to an initial position. In particular, the object moving mechanism 104 lifts the object 124 to a start position. That is, the start position corresponds to the initial position. A time at which the object 124 is at the start position can be referred to as a first time. The object moving mechanism controller 123 controls the object moving mechanism 104 to lift the object 124, which is supported by a surface, to the start position.

The object moving mechanism controller 123 controls the connecting system actuator to move the connecting system 106, and therefore the object holding portion 108 in the outwards direction 115. The object moving mechanism controller 123 moves the connecting system 106, and therefore the object holding portion 108 to a position where the object 124 is between the first gripping member 126 and the second gripping member 128.

The object moving mechanism controller 123 controls the object holding portion actuator(s) to move the first gripping member 126 and the second gripping member 128 to reduce the grip distance 129, thereby gripping the object 124. The object moving mechanism controller 123 may therefore control the object holding portion 108 to grip the object 124.

The object moving mechanism controller 123 controls the rotatable member actuator to rotate the rotatable member 112 in the first direction 120. This lifts the object holding portion 108, and therefore, the gripped object 124. The start position is a position where the object 124 is no longer in contact with the surface. The start position may be defined by an angle associated with the object moving mechanism 104 (e.g. an angle associated with the rotatable member 112).

As the force transducer 130, first accelerometer 132 and second accelerometer 134 are rigidly coupled to the rotatable member 112 (e.g. via the intermediate portion 111), the movement of the rotatable member 112 causes corresponding movement to the force transducer 130, first accelerometer 132, the first position 136, the second accelerometer 134 and the second position 138.

At 204, the force transducer 130 measures a force associated with the object 124, at the first time. The force is that which is exerted on the force transducer 130 by the mass of the object holding portion 108 and the object 124. The force transducer 130 provides the force output in response to the force exerted on the force transducer 130 by the mass of the object holding portion 108 and the object 124. The force output is indicative of the mass of the object holding portion 108 and the object 124. The ADC 131 samples the force output, and generates an ADC output based on the force output. The force output is therefore converted by the ADC to the ADC output. The ADC 131 provides the ADC output to the at least one processor 140. In some embodiments, the at least one processor 140 stores the force output at the first time in the memory 142. In some embodiments, the at least one processor 140 stores the ADC output at the first time in the memory 142.

The at least one processor 140 may be triggered to store the force output and/or the ADC output in the memory 142 at the first time by the angle associated with the object moving mechanism 104 exceeding a first angle threshold. In other words, the at least one processor 140 may compare the angle associated with the object moving mechanism 104 to the first angle threshold, and store the force output and/or the ADC output in the memory 142 when the angle associated with the object moving mechanism 104 exceeds the first angle threshold. The time when the angle associated with the object moving mechanism 104 exceeds the first angle threshold may therefore be the first time.

The first accelerometer 132 measures acceleration at the first position 136, at the first time. The first accelerometer output generated at the first time is indicative of the measured acceleration at the first position 136 at the first time. The first accelerometer 132 provides the first accelerometer output at the first time to the at least one processor 140. In some embodiments, the at least one processor 140 stores the first acceleration output at the first time in the memory 142. The at least one processor 140 may be triggered to store the first acceleration output at the first time in the memory 142 by the angle associated with the object moving mechanism 104 exceeding the first angle threshold, as described with reference to the force transducer 130.

The second accelerometer 134 measures acceleration at the second position 138, at the first time. The second accelerometer output at the first time is indicative of the measured acceleration at the second position 138 at the first time. The second accelerometer 134 provides the second accelerometer output at the first time to the at least one processor 140. In some embodiments, the at least one processor 140 stores the second acceleration output at the first time in the memory 142. The at least one processor 140 may be triggered to store the second acceleration output at the first time in the memory 142 by the angle associated with the object moving mechanism 104 exceeding the first angle threshold, as described with reference to the force transducer 130.

At 206, the object moving mechanism 104 moves the object holding portion 108 and the object 124 to a subsequent position. In particular, the object moving mechanism 104 lifts the object holding portion 108 and the object 124 to a load discharge position. That is, the load discharge position corresponds to the subsequent position. The object moving mechanism controller 123 controls the rotatable member actuator to rotate the rotatable member 112 in the first direction 120. This lifts the object holding portion 108, and therefore, the gripped object 124 from the start position to the load discharge position. In some embodiments, the object moving mechanism controller 123 controls the connecting system actuator to move the connecting system 106, and therefore the object holding portion 108 in the inwards direction 117. This may be done as object moving mechanism 104 lifts the object holding portion 108 and the object 124 to a load discharge position.

It is noted that the movement of the object 124 from being supported by the surface to the load discharge position is continuous. That is, the object holding portion 108 is continuously moved to the load discharge position without stopping or slowing at or near the start position.

The reader module 158 may read the object identification tag 160 of the object 124 when the object holding portion 108 and the object 124 are in the load discharge position, to acquire the object identification information. The at least one processor 140 may store the object identification information in the memory 142.

At 208, the force transducer 130 measures the force associated with the object 124, at a first plurality of times within a first time window. The first time window corresponds to a time window during which the object 124 is lifted from the start position to the load discharge position.

The angle associated with the object moving mechanism 104 (e.g. an angle of the rotatable member 112 with respect to a horizontal plane) may be used to indicate the beginning of the first time window and the end of the first time window. That is, the first time window may begin when the first angle associated with the object moving mechanism 104 is greater than the first angle threshold. The first time window may end when a second angle associated with the object moving mechanism 104 is greater than a second angle threshold.

The force measured by the force transducer 130 at each respective time of the first plurality of times is that which is exerted on the force transducer 130 by the mass of the object holding portion 108 and the object 124 at the respective time of the first plurality of times. Each of the corresponding force outputs is indicative of the mass of the object holding portion 108 and the object 124. The ADC 131 samples the force output of the force transducer 130 at each respective time of the first plurality of times, and generates corresponding ADC outputs based on the force outputs. The ADC 131 provides the ADC outputs to the at least one processor 140. In some embodiments, the at least one processor 140 stores the force output at each respective time of the first plurality of times in the memory 142. In some embodiments, the at least one processor 140 stores the ADC output at each respective time of the first plurality of times in the memory 142.

The first accelerometer 132 measures acceleration at the first position 136, at each respective time of the first plurality of times. The first accelerometer output generated at each respective time of the first plurality of times is indicative of the measured acceleration at the first position 136 at the respective time of the first plurality of times. The first accelerometer 132 provides the first accelerometer output at each respective time of the first plurality of times to the at least one processor 140. In some embodiments, the at least one processor 140 stores the first acceleration output at each respective time of the first plurality of times in the memory 142.

The second accelerometer 134 measures acceleration at the second position 138, at each respective time of the first plurality of times. The second accelerometer output at each respective time of the first plurality of times is indicative of the measured acceleration at the second position 138 at the respective time of the first plurality of times. The second accelerometer 134 provides the second accelerometer output at each respective time of the first plurality of times to the at least one processor 140. In some embodiments, the at least one processor 140 stores the second acceleration output each respective time of the first plurality of times in the memory 142.

At 210, the object moving mechanism 104 discharges the load of the object 124 into the hopper 107 of the object moving system 100. When in the load discharge position, the object 124 may be in a position where the load is discharged gravitationally. That is, the force on the load due to gravity causes the load to discharge from the object 124 into the hopper 107. Alternatively, the object moving mechanism controller 123 may control the impedance portion actuator to rotate the impedance portion 111, and therefore the object holding portion 108 and the object 124 to a position where the load is discharged gravitationally.

At 212, the force transducer 130 measures a force associated with the object 124, at a second time. The force is that which is exerted on the force transducer 130 by the mass of the object holding portion 108 and the object 124, as described with reference to 204. The ADC 131 samples the force output, and generates an ADC output based on the force output at the second time. The ADC 131 provides the ADC output to the at least one processor 140. In some embodiments, the at least one processor 140 stores the force output at the second time in the memory 142. In some embodiments, the at least one processor 140 stores the ADC output at the second time in the memory 142.

The at least one processor 140 may be triggered to store the force output and/or the ADC output in the memory 142 at the second time by the angle associated with the object moving mechanism 104 becoming less than a third angle threshold. In other words, the at least one processor 140 may compare the angle associated with the object moving mechanism 104 to the third angle threshold, and store the force output and/or the ADC output in the memory 142 when the angle associated with the object moving mechanism 104 is less than the third angle threshold. The time when the angle associated with the object moving mechanism 104 becomes less than the third angle threshold may therefore be the second time.

The first accelerometer 132 measures acceleration at the first position 136, at the second time. The first accelerometer output generated at the second time is indicative of the measured acceleration at the first position 136 at the second time. The first accelerometer 132 provides the first accelerometer output at the second time to the at least one processor 140. In some embodiments, the at least one processor 140 stores the first acceleration output at the second time in the memory 142. The at least one processor 140 may be triggered to store the first acceleration output at the second time in the memory 142 by the angle associated with the object moving mechanism 104 being less than the third angle threshold, as described with reference to the force transducer 130.

The second accelerometer 134 measures acceleration at the second position 138, at the second time. The second accelerometer output at the second time is indicative of the measured acceleration at the second position 138 at the second time. The second accelerometer 134 provides the second accelerometer output at the second time to the at least one processor 140. In some embodiments, the at least one processor 140 stores the second acceleration output at the second time in the memory 142. The at least one processor 140 may be triggered to store the second acceleration output at the second time in the memory 142 by the angle associated with the object moving mechanism 104 being less than the third angle threshold, as described with reference to the force transducer 130.

At 214, the object moving mechanism 104 moves the object holding portion 108 and the object 124 to the first position. In particular, the object moving mechanism 104 lowers the object holding portion 108 and the object 124 to the start position. The object moving mechanism controller 123 controls the rotatable member actuator to rotate the rotatable member 112 in the second direction 122. This lowers the object holding portion 108, and therefore, the gripped object 124 from the load discharge position to the start position.

It is noted that the movement of the object 124 from the load discharge position to the start position may be continuous. That is, the object holding portion 108 may be continuously moved to the start position without stopping or slowing down.

At 216, the force transducer 130 measures the force associated with the object 124 at a second plurality of times within a second time window. The second time window corresponds to a time window during which the object 124 is lowered from the load discharge position to the start position. The second time window corresponds to a time window during which the rotatable member 112

The angle associated with the object moving mechanism 104 (e.g. an angle of the rotatable member 112 with respect to a horizontal plane) may be used to indicate the beginning of the second time window and the end of the second time window. That is, the second time window may begin when the angle associated with the object moving mechanism 104 is less than the third angle threshold. The second time window may end when the angle associated with the object moving mechanism 104 is less than a fourth angle threshold.

The force measured by the force transducer 130 at each respective time of the second plurality of times is that which is exerted on the force transducer 130 by the mass of the object holding portion 108 and the object 124 at the respective time of the second plurality of times. Each of the corresponding force outputs is indicative of the mass of the object holding portion 108 and the object 124. The ADC 131 samples the force output of the force transducer 130 at each respective time of the second plurality of times, and generates corresponding ADC outputs based on the force outputs. The ADC 131 provides the ADC outputs to the at least one processor 140. In some embodiments, the at least one processor 140 stores the force output at each respective time of the second plurality of times in the memory 142. In some embodiments, the at least one processor 140 stores the ADC output at each respective time of the second plurality of times in the memory 142.

The first accelerometer 132 measures acceleration at the first position 136, at each respective time of the second plurality of times. The first accelerometer output generated at each respective time of the second plurality of times is indicative of the measured acceleration at the first position 136 at the respective time of the second plurality of times. The first accelerometer 132 provides the first accelerometer output at each respective time of the second plurality of times to the at least one processor 140. In some embodiments, the at least one processor 140 stores the first acceleration output at each respective time of the second plurality of times in the memory 142.

The second accelerometer 134 measures acceleration at the second position 138, at each respective time of the second plurality of times. The second accelerometer output at each respective time of the second plurality of times is indicative of the measured acceleration at the second position 138 at the respective time of the second plurality of times. The second accelerometer 134 provides the second accelerometer output at each respective time of the second plurality of times to the at least one processor 140. In some embodiments, the at least one processor 140 stores the second acceleration output each respective time of the second plurality of times in the memory 142.

In some embodiments, the at least one processor 140 may execute the measuring module 152 to execute one or more of steps 204, 208, 210, 212, 214, 216.

Determining a target acceleration and an estimated mass of the object 124

At 218, the at least one processor 140 determines a target acceleration indicative of acceleration at a target position that is associated with the object. In some embodiments, the target position is an estimated centre of mass of the object 124. In some embodiments, the target position is an estimated centre of mass of the object 124 and the object holding portion 108. In some embodiments, the target position, first position and second position are coplanar. In some embodiments, the target position may change with movement of the object moving mechanism 104.

The at least one processor 140 may determine the target position based on the object identification information.

For example, the object identification information may comprise a size of the object 124. In some embodiments, where the object 124 is a waste container, the object identification information may comprise a size of the waste container. The memory 142 may store a reference table that comprises target positions for each of a plurality of object 124 sizes. The at least one processor 140 may compare the size determined from the object identification information to the sizes of the reference table, and use the stored target position that corresponds to the size of the object identification information.

The at least one processor 140 may determine the target acceleration in a number of ways, as described below. It should be noted that all of the steps 204, 206, 208, 210, 212, 214, 216 do not necessarily need to be performed for the at least one processor 140 to determine the target acceleration, and an estimated mass of the object 124. In some embodiments, only a sub-set of the steps 204, 206, 208, 210, 212, 214, 216 are performed to enable the at least one processor 140 to determine the target acceleration, and an estimated mass of the object 124.

Determining a target acceleration and an estimated mass of the object 124 using the measurements at the first time

In some embodiments, step 204 of the steps 204, 206, 208, 210, 212, 214, 216 is performed to enable the determination of the target acceleration and the estimated mass of the object 124 at the first time. In these embodiments, at step 218, the at least one processor 140 determines the target acceleration, at the first time, based at least in part on the acceleration at the first position and the acceleration at the second position at the first time, the accelerometer distance and the target position. In particular, the at least one processor 140 determines the target acceleration, at the first time, based at least in part on the first acceleration output at the first time, the second acceleration output at the first time, the accelerometer distance and the target position. More specifically, the at least one processor 140 determines the target acceleration, at the first time, based at least in part on the first acceleration output at the first time, the second acceleration output at the first time, the accelerometer distance and a target position distance. The target position distance corresponds to a distance between the target position and the second position. In some embodiments, the at least one processor 140 may retrieve the target position distance from the reference table, as previously described with reference to the target position.

The at least one processor 140 determines the target acceleration at the first time by solving for an argument parameter $a_x$ in a target acceleration equation. Specifically, the at least one processor 140 determines the target acceleration at the first time by solving for the argument parameter $a_x$ in:

$$a_x = \frac{a_2(l_1 + l_2) - a_1 l_2}{l_1}$$

Where $a_1$ is the first acceleration output (i.e. the acceleration at the first position) at the first time, $a_2$ is the second acceleration output (i.e. the acceleration at the second position) at the first time, $a_x$ is the target acceleration at the first time, $l_1$ is the acceleration distance, and $l_2$ is the target position distance.

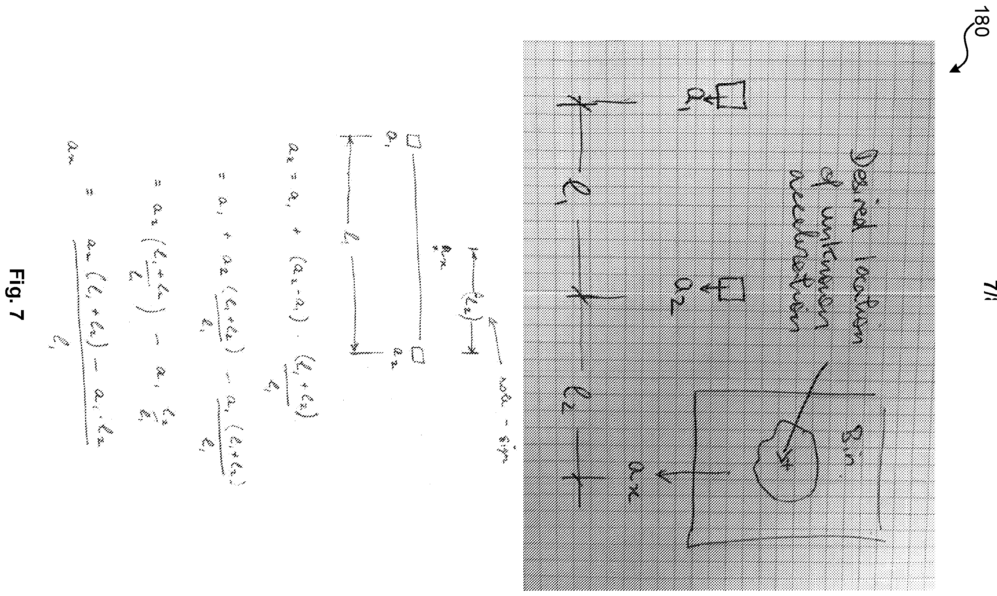

Referring to Figure 7, there is illustrated a derivation 180 of the target acceleration equation, according to some embodiments. In the derivation 180, $a_1$ is the acceleration at the first position, $a_2$ is the acceleration at the second position, $a_x$ is the acceleration at the target position, $l_1$ is the acceleration distance, and $l_2$ is the target position distance.

At 220, the at least one processor 140 determines an estimated mass of the object 124 at the first time based at least in part on the force output at the first time and the determined target acceleration at the first time. More specifically, the at least one processor 140 determines the estimated mass of the object 124 at the first time based at least in part on the ADC output at the first time and the determined target acceleration at the first time. Therefore, determining the estimated mass of the object holding portion 108 and the object 124, based at least in part on the force output (or force), comprises determining the estimated mass of the object holding portion 108 and the object 124 based at least in part on the ADC output. Furthermore, determining the estimated mass of the object 124, based at least in part on the force output (or force), comprises determining the estimated mass of the object 124 based at least in part on the ADC output.

The at least one processor 140 determines an estimated mass of the object holding portion 108 and the object 124 at the first time by solving for a mass argument parameter m in a mass estimation equation. Specifically, the at least one processor 140 determines the estimated mass of the object holding portion 108 and the object 124 at the first time by solving for the mass argument parameter m in:

$$m = K \frac{ADC}{a_x}$$

Where m is the estimated mass of the object holding portion 108 and the object 124 at the first time, *ADC* is the ADC output at the first time, *K* is a calibration factor that relates the ADC output to a corresponding mass measurement and $a_x$ is the

target acceleration at the first time.

The mass of the object holding portion 108 is known. The mass of the object holding portion 108 may be stored in the memory 142. The at least one processor 140 therefore determines the estimated mass of the object 124 at the first time by subtracting the mass of the object holding portion 108 from the estimated mass of the object holding portion 108 and the object 124 at the first time.

The estimated mass of the object 124 at the first time is an estimate of the combined mass of the object 124 and the load.

The object moving mechanism 104 may be rated to lift objects within a certain mass range. If the object moving mechanism 104 attempts to lift objects with masses greater than an upper limit of the mass range, the object moving mechanism 104 may break or suffer accelerated wear. In some embodiments, the at least one processor 140 compares the estimated mass of the object holding portion 108 and the object 124 at the first time to a mass threshold. The mass threshold may be set to a mass beyond a rated lifting mass of the object moving mechanism 104. If the estimated mass of the object holding portion 108 and the object 124 is greater than the mass threshold, the at least one processor 140 may provide a control output. The control output may be configured to activate the alarm 133. In some embodiments, the control output may be configured to stop the method 200. For example, the at least one processor 140 may provide the control output to the object moving mechanism controller 123, which, in response, may stop the process of collecting the load of the object 124. In some embodiments, the control output may be configured to generate an output on the display 125 indicating the estimated mass of the object holding portion 108 and the object 124 exceeds the mass threshold. In some embodiments, the at least one processor 140 may execute the system control module 150 to provide the control output as described herein.

<u>Determining a target acceleration and an estimated mass of the object 124 using the measurements of the first time window</u>

In some embodiments, steps 204, 206 and 208 of the steps 204, 206, 208, 210, 212, 214, 216 are performed to enable the determination of the target acceleration and the estimated mass of the object 124. In these embodiments, at step 218, the at least one processor 140 determines a first plurality of target accelerations, each target acceleration of the first plurality being indicative of acceleration at the target position at a respective time of the first plurality of times within the first time window. Each of the first plurality of target accelerations is determined based at least in part on the acceleration at the first position and the acceleration at the second position at the at the respective time of the first plurality of times, the accelerometer distance and the target position. In particular, the at least one processor 140 determines the first plurality of target accelerations based at least in part on the first acceleration output and the second acceleration output at the respective time of the first plurality of times, the accelerometer distance and the target position. More specifically, the at least one processor 140 determines the first plurality of target accelerations based at least in part on the first acceleration output and the second acceleration output at the respective time of the first plurality of times, the accelerometer distance and the target position distance. The target position distance is as previously described.

The at least one processor 140 determines the target acceleration at each respective time of the first plurality of times by solving for an argument parameter $a_{x,1}[n]$ in a target acceleration equation. Specifically, the at least one processor 140 determines the target acceleration at each respective time of the first plurality of times by solving for the argument parameter $a_{x,1}[n]$ in:

$$a_{x,1}[n] = \frac{a_{2,1}[n]\big(l_1 + l_{2,1}[n]\big) - a_{1,1}[n]l_{2,1}[n]}{l_1}$$

Where $n$ is the respective time of the first plurality of times, $a_{1,1}[n]$ is the first acceleration output at the respective time of the first plurality of times, $a_{2,1}[n]$ is the second acceleration output at the respective time of the first plurality of times, $a_{x,1}[n]$ is the target acceleration at the respective time of the first plurality of times, $l_1$ is the acceleration distance, and $l_{2,1}[n]$ is the target position distance.

At 220, the at least one processor 140 determines an estimated mass of the object 124 based at least in part on the force outputs at each time of the first plurality of times and the determined target accelerations at each time of the first plurality of times. More specifically, the at least one processor 140 determines the estimated mass of the object 124 based at least in part on the ADC output at each respective time of the first plurality of times and the determined target acceleration at each time of the first plurality of times. Therefore, determining the estimated mass of the object holding portion 108 and the object 124, based at least in part on the force output (or force), comprises determining the estimated mass of the object holding portion 108 and the object 124 based at least in part on the ADC output. Furthermore, determining the estimated mass of the object 124, based at least in part on the force output (or force), comprises determining the estimated mass of the object 124 based at least in part on the ADC output.

The at least one processor 140 determines the estimated mass of the object holding portion 108 and the object 124 by solving for a mass argument parameter $m_{1,1}$ in a mass estimation equation. Specifically, the at least one processor 140 determines the estimated mass of the object holding portion 108 and the object 124 by solving for the mass argument parameter $m_{1,1}$ in:

$$m_{1,1} = K \times \frac{1}{n} \sum_{0}^{n-1} \frac{ADC_{1,1}[n]}{a_{x,1}[n]}$$

Where $m_{1,1}$ is the estimated mass of the object holding portion 108 and the object 124 over the first time window, $ADC_{1,1}[n]$ is an ADC output at a respective time of the first plurality of times, $K$ is a calibration factor that relates the ADC output to a corresponding mass measurement and $a_{x,1}[n]$ is the determined target acceleration at the respective time of the first plurality of times. This estimated mass of the object holding portion 108 and the object 124 may be referred to as a first mean. The first time of the first plurality of times (i.e. $n = 0$) may be the first time described previously. Alternatively, the first time may be in addition to the first plurality of times, and the sum of the mass estimation equation may also include the measurements at the first time.

The mass of the object holding portion 108 is known. The at least one processor 140 therefore determines the estimated mass of the object 124 by subtracting the mass of the object holding portion 108 from the estimated mass of the holding portion 108 and the object 124 over the first time window.

The estimated mass of the object 124 is an estimate of the combined mass of the object 124 and the load.

Determining the target acceleration and an estimated mass of the object 124 using the measurements at the second time

In some embodiments, step 212 of the steps 204, 206, 208, 210, 212, 214, 216 is performed to enable the determination of the target acceleration and the estimated mass of the object 124 at the second time. In these embodiments, at step 218, the at least one processor 140 determines the target acceleration, at the second time, based at least in part on the acceleration at the first position and the acceleration at the second position at the second time, the accelerometer distance and the target position. In particular, the at least one processor 140 determines the target acceleration, at the second time, based at least in part on the first acceleration output at the second time, the second acceleration output at the second time, the accelerometer distance and the target position. More specifically, the at least one processor 140 determines the target acceleration, at the second time, based at least in part on the first acceleration output at the second time, the second acceleration output at the second time, the accelerometer distance and a target position distance.

The at least one processor 140 determines the target acceleration at the second time by solving for an argument parameter $a_{xt2}$ in a target acceleration equation. Specifically, the at least one processor 140 determines the target acceleration at the second time by solving for the argument parameter $a_{xt2}$ in:

$$a_{xt2} = \frac{a_{2t2}(l_1 + l_{2t2}) - a_{1t2}l_{2t2}}{l_1}$$

Where $a_{1t2}$ is the first acceleration output at the second time, $a_{2t2}$ is the second acceleration output at the second time, $a_{xt2}$ is the target acceleration at the second time, $l_1$ is the acceleration distance, and $l_{2t2}$ is the target position distance.

At 220, the at least one processor 140 determines an estimated mass of the object 124 at the second time based at least in part on the force output at the second time and the determined target acceleration at the second time. More specifically, the at least one processor 140 determines the estimated mass of the object 124 at the second time based at least in part on the ADC output at the second time and the determined target acceleration at the second time. Therefore, determining the estimated mass of the object holding portion 108 and the object 124, based at least in part on the force output (or force), comprises determining the estimated mass of the object holding portion 108 and the object 124 based at least in part on the ADC output. Furthermore, determining the estimated mass of the object 124, based at least in part on the force output (or force), comprises determining the estimated mass of the object 124 based at least in part on the ADC output.

The at least one processor 140 determines an estimated mass of the object holding portion 108 and the object 124 at the second time by solving for a mass argument parameter $m_{t2}$ in a mass estimation equation. Specifically, the at least one processor 140 determines the estimated mass of the object holding portion 108 and the object 124 at the second time by solving for the mass argument parameter $m_{t2}$ in:

$$m_{t2} = K \frac{ADC_{t2}}{a_{xt2}}$$

Where $m_{t2}$ is the estimated mass of the object holding portion 108 and the object 124 at the second time, $ADC_{t2}$ is the ADC output at the second time, $K$ is a calibration factor that relates the ADC output to a corresponding mass measurement and $a_{xt2}$ is the target acceleration at the second time.

The mass of the object holding portion 108 is known as previously described. The at least one processor 140 therefore determines the estimated mass of the object 124 at the second time by subtracting the mass of the object holding portion 108 from the estimated mass of the holding portion 108 and the object 124 at the second time.

The estimated mass of the object 124 at the second time is an estimate of the mass of the object 124 without the load.

Determining a target acceleration and an estimated mass of the object 124 using the measurements of the second time window

In some embodiments, steps 212, 214, 216 of the steps 204, 206, 208, 210, 212, 214, 216 are performed to enable the determination of the target acceleration and the estimated mass of the object 124. In these embodiments, at step 218, the at least one processor 140 determines a second plurality of target accelerations, each target acceleration of the second plurality being indicative of acceleration at the target position at a respective time of a second plurality of times within a second time window. Each of the second plurality of target accelerations is determined based at least in part on the acceleration at the first position and the acceleration at the second position at the at the respective time of the second plurality of times, the accelerometer distance and the target position. In particular, the at least one processor 140 determines the second plurality of target accelerations based at least in part on the first acceleration output and the second acceleration output at the respective time of the second plurality of times, the accelerometer distance and the target position. More specifically, the at least one processor 140 determines the second plurality of target accelerations based at least in part on the first acceleration output and the second acceleration output at the respective time of the second plurality of times, the accelerometer distance and the target position distance. The target position distance is as previously described.

The at least one processor 140 determines the target acceleration at each respective time of the second plurality of times by solving for an argument parameter $a_{x,2}[q]$ in a target acceleration equation. Specifically, the at least one processor 140 determines the target acceleration at each respective time of the second plurality of times by solving for the argument parameter $a_{x,2}[q]$ in:

$$a_{x,2}[q] = \frac{a_{2,2}[q]\big(l_1 + l_{2,2}[q]\big) - a_{1,2}[q]l_{2,2}[q]}{l_1}$$

Where $q$ is the respective time of the second plurality of times, $a_{1,2}[q]$ is the first acceleration output at the respective time of the second plurality of times, $a_{2,2}[q]$ is the second acceleration output at the respective time of the second plurality of times, $a_{x,2}[q]$ is the target acceleration at the respective time of the second plurality of times, $l_1$ is the acceleration distance, and $l_{2,2}[q]$ is the target position distance.

At 220, the at least one processor 140 determines an estimated mass of the object 124 based at least in part on the force outputs at each time of the second plurality of times and the determined target acceleration at the respective time of the second plurality of times. More specifically, the at least one processor 140 determines the estimated mass of the object 124 based at least in part on the ADC output at each respective time of the second plurality of times and the determined target acceleration at the respective time of the second plurality of times. Therefore, determining the estimated mass of the object holding portion 108 and the object 124, based at least in part on the force output (or force), comprises determining the estimated mass of the object holding portion 108 and the object 124 based at least in part on the ADC output. Furthermore, determining the estimated mass of the object 124, based at least in part on the force output (or force), comprises determining the estimated mass of the object 124 based at least in part on the ADC output.

The at least one processor 140 determines the estimated mass of the object holding portion 108 and the object 124 by solving for a mass argument parameter $m_{2,2}$ in a mass estimation equation. Specifically, the at least one processor 140 determines the estimated mass of the object holding portion 108 and the object 124 by solving for the mass argument parameter $m_{2,2}$ in:

$$m_{2,2} = K \times \frac{1}{q} \sum_{0}^{q-1} \frac{ADC_{2,2}[q]}{a_{x,2}[q]}$$

Where $m_{2,2}$ is the estimated mass of the object holding portion 108 and the object 124 over the second time window, $ADC_2$ [n] is an ADC output at a respective time of the second plurality of times, K is a calibration factor that relates the ADC output to a corresponding mass measurement and $a_{x,2}[q]$ is the determined target acceleration at the respective time of the second plurality of times. This estimated mass of the object holding portion 108 and the object 124 may be referred to as a second mean. The first time of the second plurality of times (i.e. $q = 0$) may be the second time described previously. Alternatively, the second time may be in addition to the second plurality of times, and the sum of the mass estimation equation may also include the measurements at the second time.

The mass of the object holding portion 108 is known. The at least one processor 140 therefore determines the estimated mass of the object 124 over the second time window by subtracting the mass of the object holding portion 108 from the estimated mass of the holding portion 108 and the object 124 over the second time window.

The estimated mass of the object 124 over the second time window is an estimate of the mass of the object 124 without the load.

The at least one processor 140 may store the estimated mass of the load, determined using one of the above methods, in the memory 142. The at least one processor 140 may transmit the estimated mass of the load to another computing device. For example, the at least one processor 140 may transmit the estimated mass of the load to the object moving mechanism controller 123.

In some embodiments, the processor 140 may execute the target acceleration module 142 to execute step 218. In some embodiments, the processor 140 may execute the mass estimating module 156 to execute step 220.

<u>Example implementation of the method 200</u>

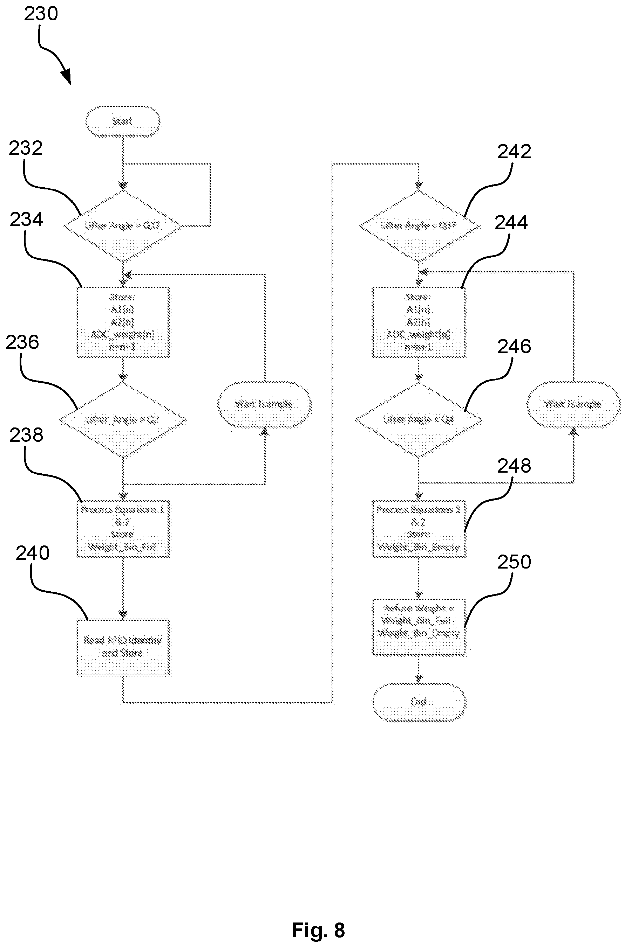

Referring to Figure 8, an example implementation 230 of the method 200, according to some embodiments, is shown.

The object moving mechanism 104 grips and lifts the object 124 as described with reference to step 202 of the method 200.

At 232, the at least one processor 140 compares the angle associated with the object moving mechanism 104 to a first angle threshold. As previously described, the angle associated with the object moving mechanism 104 may be an angle associated with the rotatable member 112. For example, the angle with the object moving mechanism 104 may be an angle between the rotatable member 112 and a horizontal plane.

At 324, when the angle associated with the object moving mechanism 104 is greater than the first angle threshold, the at least one processor 140 stores the first acceleration output, second acceleration output and ADC output for each of a first plurality of times, as described with reference to step 208 of the method 200.

At 236, the at least one processor 140 compares the angle associated with the object moving mechanism 104 to a second angle threshold. When the angle associated with the object moving mechanism 104 is greater than a second angle threshold, the at least one processor 140 stops storing the first acceleration outputs, second acceleration outputs and ADC outputs. A time between which the angle associated with the object moving mechanism 104 is greater than the first angle threshold and less than the second threshold angle correspond may correspond to the first time window previously described.

At 238, the at least one processor 140 determines a first plurality of target accelerations for each respective time of the first plurality of times, as described with reference to step 218 of the method 200. The at least one processor 140 also determines an estimated mass of the object 124 over the first time window as described with reference to step 220 of the method 200. The estimated mass of the object 124 over the first time window corresponds to a mass of the object 124 including the load.

At 240, the reader module 158 reads the object identification tag 160 of the object 124 to acquire the object identification information, as described with reference to step 206 of the method 200. The at least one processor 140 may store the object identification information in the memory 142.

The object moving mechanism 104 discharges the load into the hopper 107 of the object moving system 100. The object moving mechanism 104 begins to lower the object 124.

At 242, the at least one processor 140 compares the angle associated with the object moving mechanism 104 to a third angle threshold. When the angle associated with the object moving mechanism 104 is less than the third angle threshold, the at least one processor 140 stores the first acceleration output, second acceleration output and ADC output at a second plurality of times, as described with reference to step 216 of the method 200.

At step 244, the at least one processor 140 compares the angle associated with the object moving mechanism 104 to a fourth angle threshold. When the angle associated with the object moving mechanism 104 is less than a fourth angle threshold, the at least one processor 140 stops storing the first acceleration outputs, second acceleration outputs and ADC outputs. A time between which the angle associated with the object moving mechanism 104 is less than the third angle threshold and greater than the fourth threshold angle may correspond to the second time window previously described.

At 246, the at least one processor 140 determines a second plurality of target accelerations for each respective time of the second plurality of times as described with reference to step 218 of the method 200. The at least one processor 140 also determines an estimated mass of the object 124 over the second time window as described with reference to step 220 of the method 200. The estimated mass of the object 124 over the second time window corresponds to a mass of the object 124 without the load.

At step 250, the at least one processor determines an estimated mass of the load by subtracting the estimated mass of the object 124 over the second time window from the estimated mass of the object 124 over the first time window, as described previously. This indicates the amount of waste that was collected.

Advantages

The mass estimating system 105 and the method 200 advantageously allow for accurate estimation of the mass of the object 124 with no reduction in the speed with which the load may be collected. The mass estimating system 105 and method 200 therefore allow for the mass of the object 124 and the load to be estimated without a loss in productivity. This is a significant advantage when compared to conventional mass estimating systems which, as previously described, require pausing or slowing of the load collection process, and which can only determine mass estimates when their respective object moving mechanisms are horizontal.

Estimating the mass of the object holding portion 108 and the object 124 at the first time can advantageously enable protection of the object moving mechanism 104. The object moving mechanism 104 may break if the mass of the object holding portion 108 and the object 124 exceeds the object moving mechanism's 104 lifting capability. Therefore, by controlling the object moving mechanism 104 in response to the estimated mass of the object holding portion 108 and the object 124 exceeding the mass threshold as previously described, a likelihood that the object moving mechanism 104 will break or experience excessive wear is reduced.

The clamp 127 of the disclosed embodiments advantageously improves the accuracy of the mass estimates. Pressures within hydraulic lines of the hoses and/or cables 109 may change with operation of the object holding portion 108. This can cause movement of the hoses and/or cables 109, and changes in the centre of mass of the object holding portion 108 and the object 124. By restraining the hoses and/or cables 109 with the clamp 127, the effects of the hoses and/or cables 109 on the mass estimates is reduced.

It is desirable for a waste disposal service provider to monitor the amount of waste collected from clients (e.g. households or businesses). The disclosed mass estimating system 105 enables accurate measurement of the mass of the waste load collected. The waste disposal service provider can, as a result, inform the relevant clients of their individual waste contributions for informative purposes and to recover costs for the provided service.

Wired electrical connections between object moving systems and object moving mechanisms can experience accelerated wear, and can be unreliable due to the large number of rotations the object moving mechanism goes through. This can cause the wired electrical connections to fail in a relatively short period of time. The disclosed embodiments provide an improved object moving system 100, where the mass estimating system 105 can wirelessly communicate with other components of the object moving system 100 such as the object moving mechanism controller 123 via the wireless transceiver 162. This reduces the likelihood of the connection between the mass estimating system 105 and the object moving system 100 failing. Furthermore, other components of the object moving system 100 such as the display 125 or the alarm 133 can be wirelessly controlled directly by the mass estimating system 105.

As the disclosed object moving system 100 can also comprise the wireless energy receiving coil 168 and the wireless power transmitting coil 172, the mass estimating system 105 can be wirelessly powered. This provides similar advantages to those previously detailed with respect to the wireless transceiver 162.

Although described in the context of an object moving system 100 in the form of a waste collection vehicle 102, it will be appreciated that the mass estimating system 105 can be used in other parts of the waste processing chain. For example, the mass estimating system 105 may be used in an object moving mechanism that is configured to relocate waste within a waste processing facility. Such an object moving mechanism may be fixed in place.

**Claims**

1. A mass estimating system (105) for a waste collection system (100), the mass estimating system (105) comprising:

a force transducer (130) configured such that a force output of the force transducer changes in response to a force exerted on the force transducer;

wherein the force transducer (130) is configured to couple to an object holding portion, and the force output is indicative of a mass of the object holding portion (108) and an object (124) held by the object holding portion (108);

a first accelerometer (132) configured to be disposed at a first position (146) relative to the force transducer (130), and to provide a first acceleration output indicative of acceleration at the first position (146), and wherein, when disposed at the first position (146), the first accelerometer (132) is rigidly coupled to the force transducer (130) such that movement of the force transducer (130) causes corresponding movement of the first accelerometer (132); and

a second accelerometer (134) configured to be disposed at a second position (148) relative to the force transducer (130), and to provide a second acceleration output indicative of acceleration at the second position (148) and wherein, when disposed at the second position (148), the second accelerometer (134) is rigidly coupled to the force transducer (130) such that movement of the force transducer (130) causes corresponding movement of the second accelerometer (134);

at least one processor (140); and

a memory (142) storing program instructions (144) accessible by the at least one processor (140), and configured to cause the at least one processor to:

determine a target acceleration indicative of acceleration at a target position that is associated with the object (124) held by the object holding portion (108), at a first time, based at least in part on the first acceleration output at the first time, the second acceleration output at the first time, an accelerometer distance and the target position, and wherein the accelerometer distance is a distance between the first position (146) and the second position (148).

2. The mass estimating system of claim 1, wherein the force transducer (130), the first accelerometer (132) and the second accelerometer (134) are each configured to be moved parallel to a plane of motion of the object holding portion (108) with movement of the object holding portion (108).

3. The mass estimating system of claim 1 or claim 2, wherein the program instructions (144) are further configured to cause the at least one processor to:

determine the target acceleration at the target position, wherein the target position is an estimated centre of mass of the object holding portion (108) and the object (124) held by the object holding portion (108); and/or
determine an estimated mass of the object holding portion (108) and the object (124) at the first time based at least in part on the force output at the first time and the determined target acceleration at the first time.

4. The mass estimating system of claim 3, wherein the program instructions (144) are further configured to cause the at least one processor (140) to:

determine a first plurality of target accelerations, each target acceleration of the first plurality being indicative of acceleration at the target position at a respective time of a first plurality of times within a first time window, wherein each of the first plurality of target accelerations is determined based at least in part on the first acceleration output and the second acceleration output at the respective time, the accelerometer distance and the target position;
wherein the program instructions (144) are further configured to cause the at least one processor (140) to determine an estimated mass of the object holding portion (108) and the object (124) at each respective time of the first plurality of times, based at least in part on the force output at the respective time of the first plurality of times and the determined target acceleration at the respective time of the first plurality of times;
and optionally wherein the program instructions (144) are further configured to cause the at least one processor (140) to determine a first mean, the first mean being a mean of the estimated masses of the object holding portion (108) and the object (124) at each of the first plurality of times and the estimated mass of the object holding portion (108) and the object (124) at the first time.

5. The mass estimating system of claim 3 or claim 4, wherein the program instructions (144) are further configured to cause the at least one processor (140) to:

determine a target acceleration indicative of acceleration at the target position at a second time, based at least in part on the first acceleration output at the second time, the second acceleration output at the second time, the accelerometer distance and the target position;
wherein the program instructions (144) are further configured to cause the at least one processor (140) to determine an estimated mass of the object holding portion (108) and the object (124) at the second time based at least in part on the force output at the second time and the determined target acceleration at the second time.

6. The mass estimating system of any of claims 3 to 5, wherein the program instructions (144) are further configured to cause the at least one processor (140) to:

determine a second plurality of target accelerations, each target acceleration of the second plurality being indicative of acceleration at the target position at a respective time of a second plurality of times within a second time window, wherein each of the second plurality of target accelerations is determined based at least in part on the first acceleration output and the second acceleration output at the respective time of the second plurality of times, the accelerometer distance and the target position;

wherein the program instructions (144) are further configured to cause the at least one processor (140) to determine an estimated mass of the object holding portion (108) and the object (124) at each respective time of the second plurality of times, based at least in part on the force output at the respective time of the second plurality of times and the determined target acceleration at the respective time of the second plurality of times; and optionally wherein the program instructions (144) are further configured to cause the at least one processor (140) to: determine an or the estimated mass of the object holding portion (108) and the object (124) at the second time based at least in part on the force output at the second time and the determined target acceleration at the second time; and determine a second mean, the second mean being a mean of the estimated masses of the object holding portion (108) and the object (124) at each of the second plurality of times and the estimated mass of the object (124) at the second time.

7. The mass estimating system of claim 5 when dependent on at least claim 4, wherein the program instructions (144) are further configured to cause the at least one processor (140) to determine a difference between the estimated mass of the object holding portion (108) and the object (124) at the first time and the estimated mass of the object holding portion (108) and the object (124) at the second time.

8. The mass estimating system of claim 6 when dependent on at least claim 4, wherein the program instructions (144) are further configured to cause the at least one processor (140) to determine a difference between the first mean and the second mean.

9. The mass estimating system of claim 5 when dependent on at least claim 3, wherein the second time is after the first time; and optionally wherein the second time window is after the first time window.

10. The mass estimating system of any of claims 3 to 9, wherein the target acceleration is determined based at least in part on a target position distance corresponding to a distance between the target position and the second position.

11. The mass estimating system of any of claims 1 to 10, wherein:

the force transducer (130) defines a fixed side (136) and an active side (138); the active side (138) is configured to couple to the object holding portion (108); and optionally wherein the first position (146) is near the fixed side (136) and the second position (148) is near the active side (138).

12. The mass estimating system of any of claims 3 to 10, or claim 11 when dependent on at least claim 3, wherein the first position (146), the second position (148) and the target position are coplanar.

13. An object moving mechanism (104) comprising:

the mass estimating system (105) of any of claims 1 to 12; the object holding portion (108); and a connecting system (106) configured to:

couple to the force transducer (130) at one end and a vehicle (102) at another end; and move the force transducer (130) and the object holding portion (108); and

optionally wherein:
the mass estimating system (105) further comprises a first wireless transceiver (162), the object moving mechanism (104) further comprises a second wireless transceiver (164), and the first wireless transceiver (162) is configured to transmit a wireless signal comprising the estimated mass of the object (124) or the object holding portion (108) and the object (124), and the second wireless transceiver (164) is configured to receive the wireless signal; and/or

the connecting system (106) comprises a wireless energy transmission coil (172), the object holding portion (108) comprises a wireless energy receiving coil (168), and the wireless energy transmission coil (172) is configured to wirelessly transmit energy to the wireless energy receiving coil (168).

14. A method (200) for estimating a mass of an object (124) being moved, the method (200) performed using the mass estimating system (105) of any of claims 1 to 12, the method (200) comprising:

measuring, at a first time that is while the object (124) is being lifted:

a force associated with the object (124), by a force transducer (130) configured such that a force output of the force transducer (130) changes in response to a force exerted on the force transducer (130);
acceleration at a first position (146) relative to the force transducer (130), by a first accelerometer (132) configured to be disposed at the first position (146); and
acceleration at a second position (148) relative to the force transducer (130), by a second accelerometer (134) configured to be disposed at the second position (148);

determining a target acceleration indicative of acceleration at a target position that is associated with the object (124), at the first time, based at least in part on the acceleration at the first position (146) and the acceleration at the second position (148) at the first time, an accelerometer distance and the target position;
wherein the accelerometer distance is a distance between the first position (146) and the second position (148); and
determining an estimated mass of an object holding portion (108) and the object (124) at the first time based at least in part on the force at the first time and the determined target acceleration at the first time.

15. A non-transitory computer readable storage medium (142) comprising instructions (144) which when executed by one or more processors (140) cause the mass estimating system (105) according to claims 1-12 to perform the method (200) of claim 14.

**Patentansprüche**

1. Massenschätzsystem (105) für ein Abfallsammelsystem (100), wobei das Massenschätzsystem (105) Folgendes umfasst:

einen Kraftaufnehmer (130), der so ausgelegt ist, dass sich eine Kraftausgabe des Kraftaufnehmers in Reaktion auf eine auf den Kraftaufnehmer ausgeübte Kraft ändert;
wobei der Kraftaufnehmer (130) dazu ausgelegt ist, mit einem Objekthalteabschnitt gekoppelt zu werden, und die Kraftausgabe eine Masse des Objekthalteabschnitts (108) und eines von dem Objekthalteabschnitt (108) gehaltenen Objekts (124) angibt;
einen ersten Beschleunigungsmesser (132), der dazu ausgelegt ist, an einer ersten Position (146) relativ zu dem Kraftaufnehmer (130) angeordnet zu sein und eine erste Beschleunigungsausgabe bereitzustellen, die eine Beschleunigung an der ersten Position (146) angibt, und wobei der erste Beschleunigungsmesser (132), wenn er an der ersten Position (146) angeordnet ist, starr mit dem Kraftaufnehmer (130) gekoppelt ist, sodass Bewegung des Kraftaufnehmers (130) eine entsprechende Bewegung des ersten Beschleunigungsmessers (132) bewirkt; und
einen zweiten Beschleunigungsmesser (134), der dazu ausgelegt ist, an einer zweiten Position (148) relativ zu dem Kraftaufnehmer (130) angeordnet zu sein und eine zweite Beschleunigungsausgabe bereitzustellen, die eine Beschleunigung an der zweiten Position (148) angibt, und wobei der zweite Beschleunigungsmesser (134), wenn er an der zweiten Position (148) angeordnet ist, starr mit dem Kraftaufnehmer (130) gekoppelt ist, sodass Bewegung des Kraftaufnehmers (130) eine entsprechende Bewegung des zweiten Beschleunigungsmessers (134) bewirkt;
mindestens einen Prozessor (140); und
einen Speicher (142), der Programmanweisungen (144) speichert, auf die durch den mindestens einen Prozessor (140) zugegriffen werden kann, und die dazu ausgelegt sind, den mindestens einen Prozessor zu Folgendem zu veranlassen:

Bestimmen einer Zielbeschleunigung, die eine Beschleunigung an einer Zielposition, die mit dem von dem Objekthalteabschnitt (108) gehaltenen Objekt (124) assoziiert ist, zu einem ersten Zeitpunkt angibt, zumindest teilweise basierend auf der ersten Beschleunigungsausgabe zum ersten Zeitpunkt, der zweiten Beschleunigungsausgabe zum ersten Zeitpunkt, einer Beschleunigungsmesserentfernung und der Zielposition, und wobei die Beschleunigungsmesserentfernung eine Entfernung zwischen der ersten Position (146) und der zweiten Position (148) ist.

2. Massenschätzsystem nach Anspruch 1, wobei der Kraftaufnehmer (130), der erste Beschleunigungsmesser (132) und der zweite Beschleunigungsmesser (134) jeweils dazu ausgelegt sind, parallel zu einer Bewegungsebene des Objekthalteabschnitts (108) mit der Bewegung des Objekthalteabschnitts (108) bewegt zu werden.

3. Massenschätzsystem nach Anspruch 1 oder Anspruch 2, wobei die Programmanweisungen (144) ferner dazu ausgelegt sind, den mindestens einen Prozessor zu Folgendem zu veranlassen:

Bestimmen der Zielbeschleunigung an der Zielposition, wobei die Zielposition ein geschätzter Masseschwerpunkt des Objekthalteabschnitts (108) und des von dem Objekthalteabschnitt (108) gehaltenen Objekts (124) ist; und/oder
Bestimmen einer geschätzten Masse des Objekthalteabschnitts (108) und des Objekts (124) zum ersten Zeitpunkt zumindest teilweise basierend auf der Kraftausgabe zum ersten Zeitpunkt und der bestimmten Zielbeschleunigung zum ersten Zeitpunkt.

4. Massenschätzsystem nach Anspruch 3, wobei die Programmanweisungen (144) ferner dazu ausgelegt sind, den mindestens einen Prozessor (140) zu Folgendem zu veranlassen:

Bestimmen einer ersten Mehrzahl von Zielbeschleunigungen, wobei jede Zielbeschleunigung der ersten Mehrzahl eine Beschleunigung an der Zielposition zu einem jeweiligen Zeitpunkt einer ersten Mehrzahl von Zeitpunkten innerhalb eines ersten Zeitfensters angibt, wobei jede der ersten Mehrzahl von Zielbeschleunigungen zumindest teilweise basierend auf der ersten Beschleunigungsausgabe und der zweiten Beschleunigungsausgabe zum jeweiligen Zeitpunkt, der Beschleunigungsmesserentfernung und der Zielposition bestimmt wird;
wobei die Programmanweisungen (144) ferner dazu ausgelegt sind, den mindestens einen Prozessor (140) zu veranlassen, eine geschätzte Masse des Objekthalteabschnitts (108) und des Objekts (124) zu jedem jeweiligen Zeitpunkt der ersten Mehrzahl von Zeitpunkten zumindest teilweise basierend auf der Kraftausgabe zum jeweiligen Zeitpunkt der ersten Mehrzahl von Zeitpunkten und der bestimmten Zielbeschleunigung zum jeweiligen Zeitpunkt der ersten Mehrzahl von Zeitpunkten zu bestimmen;
und wobei optional die Programmanweisungen (144) ferner dazu ausgelegt sind, den mindestens einen Prozessor (140) zu veranlassen, einen ersten Mittelwert zu bestimmen, wobei der erste Mittelwert ein Mittelwert der geschätzten Massen des Objekthalteabschnitts (108) und des Objekts (124) zu jedem der ersten Mehrzahl von Zeitpunkten und der geschätzten Masse des Objekthalteabschnitts (108) und des Objekts (124) zum ersten Zeitpunkt ist.

5. Massenschätzsystem nach Anspruch 3 oder Anspruch 4, wobei die Programmanweisungen (144) ferner dazu ausgelegt sind, den mindestens einen Prozessor (140) zu Folgendem zu veranlassen:

Bestimmen einer Zielbeschleunigung, die eine Beschleunigung an der Zielposition zu einem zweiten Zeitpunkt angibt, zumindest teilweise basierend auf der ersten Beschleunigungsausgabe zum zweiten Zeitpunkt, der zweiten Beschleunigungsausgabe zum zweiten Zeitpunkt, der Beschleunigungsmesserentfernung und der Zielposition;
wobei die Programmanweisungen (144) ferner dazu ausgelegt sind, den mindestens einen Prozessor (140) zu veranlassen, eine geschätzte Masse des Objekthalteabschnitts (108) und des Objekts (124) zum zweiten Zeitpunkt zumindest teilweise basierend auf der Kraftausgabe zum zweiten Zeitpunkt und der bestimmten Zielbeschleunigung zum zweiten Zeitpunkt zu bestimmen.

6. Massenschätzsystem nach einem der Ansprüche 3 bis 5, wobei die Programmanweisungen (144) ferner dazu ausgelegt sind, den mindestens einen Prozessor (140) zu Folgendem zu veranlassen:

Bestimmen einer zweiten Mehrzahl von Zielbeschleunigungen, wobei jede Zielbeschleunigung der zweiten Mehrzahl eine Beschleunigung an der Zielposition zu einem jeweiligen Zeitpunkt einer zweiten Mehrzahl von Zeitpunkten innerhalb eines zweiten Zeitfensters angibt, wobei jede der zweiten Mehrzahl von Zielbeschleunigungen zumindest teilweise basierend auf der ersten Beschleunigungsausgabe und der zweiten Beschleunigungsausgabe zum jeweiligen Zeitpunkt der zweiten Mehrzahl von Zeitpunkten, der Beschleunigungsmesserentfernung und der Zielposition bestimmt wird;

wobei die Programmanweisungen (144) ferner dazu ausgelegt sind, den mindestens einen Prozessor (140) zu veranlassen, eine geschätzte Masse des Objekthalteabschnitts (108) und des Objekts (124) zu jedem jeweiligen Zeitpunkt der zweiten Mehrzahl von Zeitpunkten zumindest teilweise basierend auf der Kraftausgabe zum jeweiligen Zeitpunkt der zweiten Mehrzahl von Zeitpunkten und der bestimmten Zielbeschleunigung zum jeweiligen Zeitpunkt der zweiten Mehrzahl von Zeitpunkten zu bestimmen; und

wobei optional die Programmanweisungen (144) ferner dazu ausgelegt sind, den mindestens einen Prozessor (140) zu Folgendem zu veranlassen: Bestimmen einer oder der geschätzten Masse des Objekthalteabschnitts (108) und des Objekts (124) zum zweiten Zeitpunkt zumindest teilweise basierend auf der Kraftausgabe zum zweiten Zeitpunkt und der bestimmten Zielbeschleunigung zum zweiten Zeitpunkt und Bestimmen eines zweiten Mittelwerts, wobei der zweite Mittelwert ein Mittelwert der geschätzten Massen des Objekthalteabschnitts (108) und des Objekts (124) zu jedem der zweiten Mehrzahl von Zeitpunkten und der geschätzten Masse des Objekts (124) zum zweiten Zeitpunkt ist.

7. Massenschätzsystem nach Anspruch 5, wenn mindestens von Anspruch 4 abhängig, wobei die Programmanweisungen (144) ferner dazu ausgelegt sind, den mindestens einen Prozessor (140) zu veranlassen, eine Differenz zwischen der geschätzten Masse des Objekthalteabschnitts (108) und des Objekts (124) zum ersten Zeitpunkt und der geschätzten Masse des Objekthalteabschnitts (108) und des Objekts (124) zum zweiten Zeitpunkt zu bestimmen.

8. Massenschätzsystem nach Anspruch 6, wenn mindestens von Anspruch 4 abhängig, wobei die Programmanweisungen (144) ferner dazu ausgelegt sind, den mindestens einen Prozessor (140) zu veranlassen, eine Differenz zwischen dem ersten Mittel und dem zweiten Mittel zu bestimmen.

9. Massenschätzsystem nach Anspruch 5, wenn mindestens von Anspruch 3 abhängig, wobei der zweite Zeitpunkt nach dem ersten Zeitpunkt ist; und wobei optional das zweite Zeitfenster nach dem ersten Zeitfenster ist.

10. Massenschätzsystem nach einem der Ansprüche 3 bis 9, wobei die Zielbeschleunigung zumindest teilweise basierend auf einer Zielpositionsentfernung bestimmt wird, die einer Entfernung zwischen der Zielposition und der zweiten Position entspricht.

11. Massenschätzsystem nach einem der Ansprüche 1 bis 10, wobei:

der Kraftaufnehmer (130) eine feste Seite (136) und eine aktive Seite (138) definiert;
die aktive Seite (138) dazu ausgelegt ist, mit dem Objekthalteabschnitt (108) gekoppelt zu werden; und wobei optional die erste Position (146) nahe der festen Seite (136) ist und die zweite Position (148) nahe der aktiven Seite (138) ist.

12. Massenschätzsystem nach einem der Ansprüche 3 bis 10 oder Anspruch 11, wenn mindestens von Anspruch 3 abhängig, wobei die erste Position (146), die zweite Position (148) und die Zielposition koplanar sind.

13. Objektbewegungsmechanismus (104), umfassend:

das Massenschätzsystem (105) nach einem der Ansprüche 1 bis 12;
den Objekthalteabschnitt (108); und
ein Verbindungssystem (106), das zu Folgendem ausgelegt ist:

Gekoppeltwerden mit dem Kraftaufnehmer (130) an einem Ende und mit einem Fahrzeug (102) an einem anderen Ende; und
Bewegen des Kraftaufnehmers (130) und des Objekthalteabschnitts (108); und
wobei optional:

das Massenschätzsystem (105) ferner einen ersten drahtlosen Sendeempfänger (162) umfasst, der Objektbewegungsmechanismus (104) ferner einen zweiten drahtlosen Sendeempfänger (164) umfasst und der erste drahtlose Sendeempfänger (162) dazu ausgelegt ist, ein Drahtlossignal zu übertragen, das die geschätzte Masse des Objekts (124) oder des Objekthalteabschnitts (108) und des Objekts (124) umfasst, und der zweite drahtlose Sendeempfänger (164) dazu ausgelegt ist, das Drahtlossignal zu empfangen; und/oder

das Verbindungssystem (106) eine Spule zur drahtlosen Energieübertragung (172) umfasst, der Objekthalteabschnitt (108) eine Spule zum drahtlosen Energieempfang (168) umfasst und die Spule zur drahtlosen Energieübertragung (172) dazu ausgelegt ist, Energie drahtlos an die drahtlose Energieempfangsspule (168) zu übertragen.

14. Verfahren (200) zum Schätzen einer Masse eines Objekts (124), das bewegt wird, wobei das Verfahren (200) unter Verwendung des Massenschätzsystems (105) nach einem der Ansprüche 1 bis 12 durchgeführt wird, wobei das Verfahren (200) Folgendes umfasst:

Messen von Folgendem zu einem ersten Zeitpunkt, das heißt während des Anhebens des Objekts (124):

einer Kraft, die mit dem Objekt (124) assoziiert ist, durch einen Kraftaufnehmer (130), der so ausgelegt ist, dass sich eine Kraftausgabe des Kraftaufnehmers (130) in Reaktion auf eine auf den Kraftaufnehmer (130) ausgeübte Kraft ändert;

Beschleunigung an einer ersten Position (146) relativ zu dem Kraftaufnehmer (130) durch einen ersten Beschleunigungsmesser (132), der dazu ausgelegt ist, an der ersten Position (146) angeordnet zu werden; und Beschleunigung an einer zweiten Position (148) relativ zu dem Kraftaufnehmer (130) durch einen zweiten Beschleunigungsmesser (134), der dazu ausgelegt ist, an der zweiten Position (148) angeordnet zu werden;

Bestimmen einer Zielbeschleunigung, die eine Beschleunigung an einer Zielposition, die mit dem Objekt (124) assoziiert ist, zum ersten Zeitpunkt angibt, basierend zumindest teilweise auf der Beschleunigung an der ersten Position (146) und der Beschleunigung an der zweiten Position (148) zum ersten Zeitpunkt, einer Beschleunigungsmesserentfernung und der Zielposition;

wobei die Beschleunigungsmesserentfernung eine Entfernung zwischen der ersten Position (146) und der zweiten Position (148) ist; und

Bestimmen einer geschätzten Masse eines Objekthalteabschnitts (108) und des Objekts (124) zum ersten Zeitpunkt zumindest teilweise basierend auf der Kraft zum ersten Zeitpunkt und der bestimmten Zielbeschleunigung zum ersten Zeitpunkt.

15. Nichtflüchtiges computerlesbares Speichermedium (142), das Anweisungen (144) umfasst, die, wenn sie von einem oder mehreren Prozessoren (140) ausgeführt werden, das Massenschätzsystem (105) nach Anspruch 1-12 zum Durchführen des Verfahrens (200) nach Anspruch 14 veranlassen.

**Revendications**

1. Système d'estimation de masse (105) pour un système de collecte de déchets (100), le système d'estimation de masse (105) comprenant :

un transducteur de force (130) configuré de telle sorte qu'une sortie de force du transducteur de force change en réponse à une force exercée sur le transducteur de force ;
où le transducteur de force (130) est configuré pour être couplé à une partie de maintien d'objet, et la sortie de force est indicative de la masse de la partie de maintien d'objet (108) et d'un objet (124) maintenu par la partie de maintien d'objet (108) ;
un premier accéléromètre (132) configuré pour être disposé dans une première position (146) par rapport au transducteur de force (130), et pour fournir une première sortie d'accélération indiquant l'accélération dans la première position (146), et dans lequel, lorsqu'il est disposé dans la première position (146), le premier accéléromètre (132) est couplé rigidement au transducteur de force (130) de sorte que le mouvement du transducteur de force (130) provoque un mouvement correspondant du premier accéléromètre (132) ; et
un deuxième accéléromètre (134) configuré pour être disposé à une deuxième position (148) par rapport au transducteur de force (130) et pour fournir une deuxième sortie d'accélération indicative de l'accélération à la deuxième position (148) et où, lorsqu'il est disposé à la deuxième position (148), le deuxième accéléromètre (134) est couplé rigidement au transducteur de force (130) de sorte que le mouvement du transducteur de force (130) provoque un mouvement correspondant du deuxième accéléromètre (134) ;
au moins un processeur (140) ; et
une mémoire (142) stockant des instructions de programme (144) accessibles par l'au moins un processeur (140) et configurée pour amener l'au moins un processeur à :
déterminer une accélération cible indicative d'une accélération au niveau d'une position cible associée à l'objet (124) maintenu par la partie de maintien d'objet (108), lors d'une première fois, sur la base, au moins en partie, de la première sortie d'accélération lors de la première fois, de la deuxième sortie d'accélération lors de la première fois, d'une distance d'accéléromètre et de la position cible, la distance d'accéléromètre étant une distance entre la première position (146) et la deuxième position (148).

2. Système d'estimation de masse selon la revendication 1, dans lequel le transducteur de force (130), le premier accéléromètre (132) et le deuxième accéléromètre (134) sont chacun configurés pour être déplacés parallèlement à un plan de déplacement de la partie de maintien d'objet (108) avec le déplacement de la partie de maintien d'objet (108).

3. Système d'estimation de masse selon la revendication 1 ou la revendication 2, dans lequel les instructions de programme (144) sont en outre configurées pour amener l'au moins un processeur à :

déterminer l'accélération cible au niveau de la position cible, la position cible étant un centre de masse estimé de la partie de maintien d'objet (108) et de l'objet (124) maintenu par la partie de maintien d'objet (108) ; et/ou déterminer une masse estimée de la partie de maintien d'objet (108) et de l'objet (124) la première fois sur la base, au moins en partie, de la sortie de force la première fois et de l'accélération cible déterminée la première fois.

4. Système d'estimation de masse selon la revendication 3, dans lequel les instructions de programme (144) sont en outre configurées pour amener l'au moins un processeur (140) à :

déterminer une première pluralité d'accélérations cibles, chaque accélération cible de la première pluralité étant indicative d'une accélération à la position cible lors d'une fois respective d'une première pluralité de fois dans une première fenêtre temporelle, où chacune de la première pluralité d'accélérations cibles est déterminée sur la base, au moins en partie, de la première sortie d'accélération et de la deuxième sortie d'accélération lors de la fois respective, de la distance d'accéléromètre et de la position cible ; où les instructions de programme (144) sont en outre configurées pour amener l'au moins un processeur (140) à déterminer la masse estimée de la partie de maintien d'objet (108) et de l'objet (124) lors de chaque fois respective de la première pluralité de fois, sur la base, au moins en partie, de la sortie de force lors de la fois respective de la première pluralité de fois et de l'accélération cible déterminée lors de la fois respective de la première pluralité de fois ; et, éventuellement, où les instructions de programme (144) sont en outre configurées pour amener l'au moins un processeur (140) à déterminer une première moyenne, la première moyenne étant une moyenne des masses estimées de la partie de maintien d'objet (108) et de l'objet (124) à chaque fois de la première pluralité de fois et la masse estimée de la partie de maintien d'objet (108) et de l'objet (124) lors de la première fois.

5. Système d'estimation de masse selon la revendication 3 ou la revendication 4, dans lequel les instructions de programme (144) sont en outre configurées pour amener l'au moins un processeur (140) à :

déterminer une accélération cible indicative d'une accélération à la position cible lors d'une deuxième fois, sur la base, au moins en partie, de la première sortie d'accélération lors de la deuxième fois, de la deuxième sortie d'accélération lors de la deuxième fois, de la distance de l'accéléromètre et de la position cible ; où les instructions de programme (144) sont en outre configurées pour amener l'au moins un processeur (140) à déterminer une masse estimée de la partie de maintien d'objet (108) et de l'objet (124) lors de la deuxième fois sur la base, au moins en partie, de la sortie de force lors de la deuxième fois et de l'accélération cible déterminée lors de la deuxième fois.

6. Système d'estimation de masse selon l'une quelconque des revendications 3 à 5, dans lequel les instructions de programme (144) sont en outre configurées pour amener l'au moins un processeur (140) à :

déterminer une deuxième pluralité d'accélérations cibles, chaque accélération cible de la deuxième pluralité étant indicative d'une accélération à la position cible lors d'une fois respective d'une deuxième pluralité de fois dans une deuxième fenêtre temporelle, chaque accélération cible de la deuxième pluralité d'accélérations cibles étant déterminée sur la base, au moins en partie, de la première sortie d'accélération et de la deuxième sortie d'accélération lors de la fois respective de la deuxième pluralité de fois, de la distance accéléromètre et de la position cible ; où les instructions de programme (144) sont en outre configurées pour amener l'au moins un processeur (140) à déterminer une masse estimée de la partie de maintien d'objet (108) et de l'objet (124) lors de chaque fois respective de la deuxième pluralité de fois, sur la base, au moins en partie, de la sortie de force lors de la fois respective de la deuxième pluralité de fois et de l'accélération cible déterminée lors de la fois respective de la deuxième pluralité de fois ; et

éventuellement, où les instructions de programme (144) sont en outre configurées pour amener l'au moins un processeur (140) à : déterminer une masse ou la masse estimée de la partie de maintien d'objet (108) et de l'objet (124) lors de la deuxième fois sur la base, au moins en partie, de la sortie de force lors de la deuxième fois et de l'accélération cible déterminée lors de la deuxième fois ; et déterminer une deuxième moyenne, la deuxième moyenne étant une moyenne des masses estimées de la partie de maintien d'objet (108) et de l'objet (124) à chacune des fois de la deuxième pluralité de fois et de la masse estimée de l'objet (124) lors de la deuxième fois.

7. Système d'estimation de masse selon la revendication 5 lorsqu'elle dépend d'au moins la revendication 4, dans lequel les instructions de programme (144) sont en outre configurées pour amener l'au moins un processeur (140) à déterminer une différence entre la masse estimée de la partie de maintien d'objet (108) et l'objet (124) lors de la première fois et la masse estimée de la partie de maintien d'objet (108) et l'objet (124) lors de la deuxième fois.

8. Système d'estimation de masse selon la revendication 6 lorsqu'elle dépend d'au moins la revendication 4, dans lequel les instructions de programme (144) sont en outre configurées pour amener l'au moins un processeur (140) à déterminer une différence entre la première moyenne et la deuxième moyenne.

9. Système d'estimation de masse selon la revendication 5 lorsqu'elle dépend d'au moins la revendication 3, dans lequel la deuxième fois est postérieure à la première fois ; et, facultativement, dans lequel la deuxième fenêtre temporelle est postérieure à la première fenêtre temporelle.

10. Système d'estimation de masse selon l'une quelconque des revendications 3 à 9, dans lequel l'accélération cible est déterminée sur la base, au moins en partie, d'une distance de position cible correspondant à une distance entre la position cible et la deuxième position.

11. Système d'estimation de masse selon l'une quelconque des revendications 1 à 10, dans lequel :

le transducteur de force (130) définit un côté fixe (136) et un côté actif (138) ;
le côté actif (138) est configuré pour être couplé à la partie de maintien d'objet (108) ; et, éventuellement, la première position (146) étant proche du côté fixe (136) et la deuxième position (148) étant proche du côté actif (138).

12. Système d'estimation de masse selon l'une quelconque des revendications 3 à 10, ou selon la revendication 11 lorsqu'elle dépend d'au moins la revendication 3, dans lequel la première position (146), la deuxième position (148) et la position cible sont coplanaires.

13. Mécanisme de déplacement d'objet (104) comprenant :

le système d'estimation de masse (105) selon l'une quelconque des revendications 1 à 12 ;
la partie de maintien d'objet (108) ; et
un système de connexion (106) configuré pour :

se coupler au transducteur de force (130) à une extrémité et à un véhicule (102) à une autre extrémité ; et
déplacer le transducteur de force (130) et la partie de maintien d'objet (108) ; et
éventuellement où :

le système d'estimation de masse (105) comprend en outre un premier émetteur-récepteur sans fil (162), le mécanisme de déplacement d'objet (104) comprend en outre un deuxième émetteur-récepteur sans fil (164) et le premier émetteur-récepteur sans fil (162) est configuré pour émettre un signal sans fil comprenant la masse estimée de l'objet (124) ou de la partie de maintien d'objet (108) et de l'objet (124), et le deuxième émetteur-récepteur sans fil (164) est configuré pour recevoir le signal sans fil ; et/ou le système de connexion (106) comprend une bobine de transmission d'énergie sans fil (172), la partie de maintien d'objet (108) comprend une bobine de réception d'énergie sans fil (168), et la bobine de transmission d'énergie sans fil (172) est configurée pour transmettre sans fil de l'énergie à la bobine de réception d'énergie sans fil (168).

14. Procédé (200) pour estimer la masse d'un objet (124) en déplacement, le procédé (200) réalisé à l'aide du système d'estimation de masse (105) de l'une quelconque des revendications 1 à 12, le procédé (200) comprenant :
la mesure, lors d'une première fois durant le levage de l'objet (124) :

d'une force associée à l'objet (124), par un transducteur de force (130) configuré de telle sorte qu'une sortie de force du transducteur de force (130) change en réponse à une force exercée sur le transducteur de force (130) ;
de l'accélération à une première position (146) par rapport au transducteur de force (130), par un premier accéléromètre (132) configuré pour être disposé à la première position (146) ; et
de l'accélération à une deuxième position (148) par rapport au transducteur de force (130), par un deuxième accéléromètre (134) configuré pour être disposé à la deuxième position (148) ;
la détermination d'une accélération cible indicative d'une accélération à une position cible associée à l'objet (124), lors de la première fois, sur la base, au moins en partie, de l'accélération à la première position (146) et de l'accélération à la deuxième position (148) lors de la première fois, d'une distance d'accéléromètre et de la position cible ;
où la distance d'accéléromètre est une distance entre la première position (146) et la deuxième position (148) ; et
la détermination d'une masse estimée d'une partie de maintien d'objet (108) et de l'objet (124) lors de la première fois sur la base, au moins en partie, de la force lors de la première fois et de l'accélération cible déterminée lors de la première fois.

15. Support de stockage non transitoire lisible par ordinateur (142) comprenant des instructions (144) qui, lorsqu'elles sont exécutées par un ou plusieurs processeurs (140), amènent le système d'estimation de masse (105) selon les revendications 1 à 12 à exécuter le procédé (200) selon la revendication 14.

**Fig. 1**

Fig. 2

EP 4 204 774 B1

Fig. 3

Object Moving System 100

Mass Estimating System 105

Force Transducer 130

First Accelerometer 132

Second Accelerometer 134

ADC 131

Reader Module 158

Processor 140

Display 125

Alarm 133

Object Moving Mechanism Controller 123

Memory 142

Program Instructions 144

System Control Module 150

Measuring Module 152

Target Acceleration Module 154

Mass Estimating Module 156

Fig. 4

Object Moving System 100

Mass Estimating System 105

Force Transducer 130

First Accelerometer 132

Second Accelerometer 134

Power Source 166

ADC 131

Reader Module 158

Processor 140

Wireless Transceiver 162

Circuit 170

Receiving Coil 168

Memory 142

Program Instructions 144

System Control Module 150

Measuring Module 152

Target Acceleration Module 154

Mass Estimating Module 156

Controller Wireless Transceiver 164

Transmission Coil 172

Object Moving Mechanism Controller 123

Display 125

Alarm 133

**Fig. 5**

200

202: Lift the object to the start position

↓

218: Determine the target acceleration

↓

220: Determine an estimated mass of the object

204: Measure, at a first time, the force, the acceleration at the first position and the acceleration at the second position

↓

206: Lift the object to the discharge position

↓

208: Measure, over a first time window, the force, the acceleration at the first position and the acceleration at the second position

↓

210: Discharge the load

↓

212: Measure, at a second time, the force, the acceleration at the first position and the acceleration at the second position

↓

214: Lower the object to the start position

↓

216: Measure, over a second time window, the force, the acceleration at the first position and the acceleration at the second position

**Fig. 6**

180

$$a_x = a_1 + (a_2 - a_1) \cdot \frac{(\ell_1 + \ell_2)}{\ell_1}$$

$$= a_1 + a_2 \frac{(\ell_1 + \ell_2)}{\ell_1} - a_1 \frac{(\ell_1 + \ell_2)}{\ell_1}$$

$$= a_2 \left( \frac{\ell_1 + \ell_2}{\ell_1} \right) - a_1 \frac{\ell_2}{\ell_1}$$

$$a_x = \frac{a_2 (\ell_1 + \ell_2) - a_1 \ell_2}{\ell_1}$$

Fig. 7

**Fig. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2020903097
- WO 0036374 A
- WO 2007134470 A1